# EUROPÄISCHE PATENTSCHRIFT

(11) **EP 3 936 559 B1**
(45) Veröffentlichungstag und Bekanntmachung des Hinweises auf die Patenterteilung: **22.10.2025**
(21) Anmeldenummer: 20184608.6
(22) Anmeldetag: 07.07.2020
(51) Int. Cl.: C08J 7/12, E04F 13/00, E04F 15/00, B44C 5/04

(54) **LACKIERBARE UND LACKIERTE WERKSTOFFE MIT STRUKTURIERTEN OBERFLÄCHEN**
PAINTABLE AND PAINTED MATERIALS WITH STRUCTURED SURFACES
MATIÈRES POUVANT ÊTRE LAQUÉES ET LAQUÉES À SURFACES STRUCTURÉES

(43) Veröffentlichungstag der Anmeldung: 12.01.2022
(73) Patentinhaber: Fritz Egger GmbH & Co. OG, 6380 St. Johann in Tirol (AT)
(72) Erfinder: Kemmerling, Frank, 59929 Brilon (DE)
(74) Vertreter: Cohausz & Florack

(56) Entgegenhaltungen:
- EP-A1- 3 040 476
- EP-A1- 3 210 772
- EP-A1- 3 415 318
- WO-A2-2010/079014
- DE-A1- 102013 005 184

## Beschreibung

Die Erfindung betrifft Werkstoffe mit strukturierten Oberflächen aus aminogruppenhaltigen Kunststoffen, die sich besonders für eine anschließende Lackierung eignen, strukturierte Oberflächen aus aminogruppenhaltigen Kunststoffen, die lackiert worden sind, Verfahren zu deren Herstellung, sowie die Verwendung einer Vinyl-Funktionalisierung bei der Lackierung von strukturierten Oberflächen aus aminogruppenhaltigen Kunststoffen.

### HINTERGRUND DER ERFINDUNG

Bei der Verwendung von Werkstoffen im Möbelbau oder zur Verkleidung von Fußböden, Wänden oder Decken ist es oftmals wünschenswert, deren Oberflächen so zu gestalten, dass diese nicht nur die Optik, sondern auch die Haptik von natürlichen Vorbildern wie Holz, Keramik oder Stein aufweisen. Dazu ist es im Stand der Technik bekannt, entsprechend strukturierte Dekore auf Werkstoffplatten zu erzeugen.

Bei der Herstellung von Fußbodenlaminat wird dabei zum Beispiel in der Regel wie folgt vorgegangen: Zunächst wird ein imprägniertes Dekorpapier (sog. Imprägnat) erzeugt, indem das gewünschte Dekor (Holzmaserung, Keramik, Mosaik, Fliese usw.) auf eine Papierbahn aufgedruckt wird und diese anschließend mit Aminoplastharz getränkt wird. Das so erhaltene Imprägnat kann auf eine Rolle aufgerollt oder in Bögen abgelegt und gelagert werden. In einem zweiten Schritt wird eine Trägerplatte (z.B. MDF-, HDF-, Spanplatte oder dergleichen) mit dem Imprägnat beschichtet. Dazu wird das Imprägnat und ggf. weitere aminoplastharzimprägnierte Underlay- und Overlay-Papiere auf die Trägerplatte aufgelegt, und dann in einer Presse unter Temperatureinwirkung mit der Holzwerkstoffplatte verpresst. Unter dem Einfluss von Druck und Temperatur schmilzt das Harz, wodurch sich eine homogene Filmschicht ausbildet und zugleich das Papier mit dem Holzwerkstoffträger verklebt wird. Die obere Pressplatte der Presse kann als Matrize mit einem Relief versehen sein, das vorteilhaft zu dem Dekor passt. Beim Verpressen werden dann durch die entsprechenden Abdrücke des Pressblechs in der Aminoplastharzoberfläche Vertiefungen ausgebildet, die beispielsweise die Oberfläche einer Holzplatte, die Rauheit eines Natursteinbodens oder die Fugen von verlegten Fliesen oder Mosaiksteinen nachbilden, um eine möglichst naturgetreue Oberfläche auf der Holzwerkstoffplatte auszubilden. Die Oberfläche der Aminoplastharzschicht bildet dabei die Negativ-Struktur der verwendeten Pressbleche ab.

In ähnlicher Weise können auch andere Werkstoffoberflächen aus aminogruppenhaltigen Kunststoffen bei der Herstellung strukturiert ausgebildet werden. So können Aminoplastharze auch in Pulverform aufgebracht und mit Trägern verpresst werden oder es kann eine separate Beschichtung eines Trägers mit einem Aminoplastharz oder einem anderen aminogruppenhaltigen Kunststoff erfolgen. Werkstoffe, die bereits aus aminogruppenhaltigen Kunststoffen bestehen oder diese als Bindemittel enthalten (so ein Großteil der Span- und Faserplatten), können ebenfalls mit einer strukturierten Oberfläche versehen werden. Neben der Prägung durch strukturierte Pressbleche können dekorative Strukturen auch durch eine Kaschierung, Kalandrierung, Ätzung, Lasern oder dreidimensionale Bedruckung erzeugt werden.

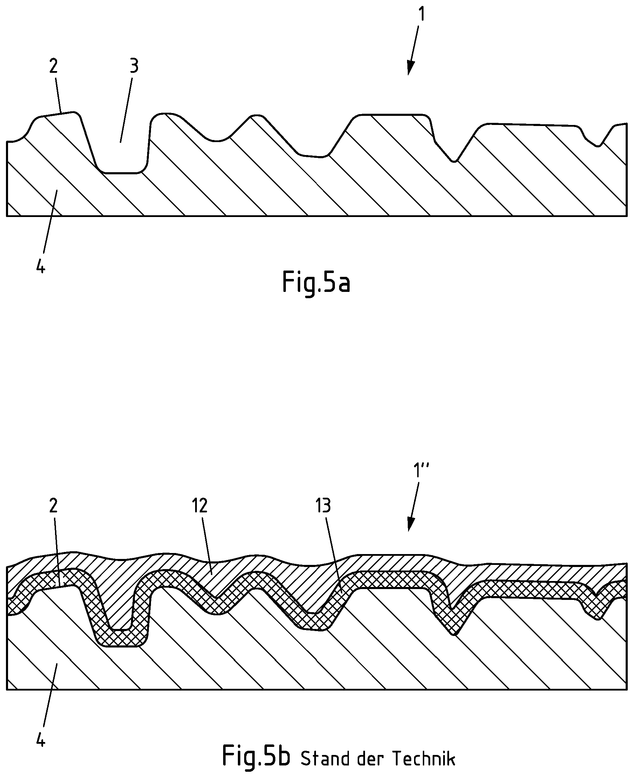

Nachteilig am Stand der Technik war aber bislang die schlechte Lackierbarkeit von mit dekorativen Strukturen versehenen Oberflächen aus aminogruppenhaltigen Kunststoffen. Die gängigen strahlenhärtenden Lacke haften schlecht auf aminogruppenhaltigen Kunststoffoberflächen. Aus diesem Grund müssen Primerschichten oder Grundierungen als Haftervermittlerschichten aufgetragen werden, bevor die eigentliche Lackierung der Kunststoffoberfläche mit strahlenhärtenden Lacken erfolgen kann. Für die besonders schlecht lackierbaren Melaminharzoberflächen wurden beispielsweise spezielle Primerschichten oder auch Heißschmelzkleber entwickelt, die direkt auf Aminoplastharzoberflächen aufgetragen werden und dann als Basis für eine oder mehrere weitere Lackschichten dienen können. Durch diesen zwingend mehrschichtigen und damit dicken Lackaufbau geht jedoch eine darunterliegende Struktur der Oberfläche beim Lackieren verloren (siehe Fig. 5b).

Es wäre jedoch wünschenswert, strukturierte Oberflächen unter Beibehaltung der Struktur lackieren zu können. Dadurch ließen sich die eingangs erläuterten optischen und dekorativen Effekte strukturierter Oberflächen mit denen einer Lackierung verbinden. Gerade bei aminogruppenhaltigen Kunststoff- und insbesondere bei Aminoplastharzoberflächen wäre eine Überlackierung oftmals notwendig, um die gewünschten Oberflächeneigenschaften einzustellen.

Zwar weisen aminogruppenhaltige Kunststoffe im Allgemeinen und Aminoplastharze im Besonderen eine gute Härte, Chemikalienbeständigkeit sowie Hitze- und Feuerwiderstandsfähigkeit auf. Jedoch gibt es auch Nachteile bei den Oberflächeneigenschaften.

Nachteilig insbesondere an Aminoplastharzoberflächen ist der hohe Glanzgrad, der gerade bei dem Ziel, natürliche Oberflächen nachzuahmen, als störend empfunden wird, da diese meist ein wesentlich matteres Erscheinungsbild aufweisen. Viele Verbraucher empfinden eine matte, im Gegensatz zu einer aufdringlichen hochglänzenden Oberfläche als Ruhepunkt für das Auge. Vorteilhaft ist ferner, dass durch matte Oberflächen Unebenheiten des Untergrundes optisch stärker ausgeglichen werden als durch glänzende Oberflächen. Der hohe Glanzgrad führt zudem dazu, dass Aminoplastharzoberflächen optisch sehr anfällig gegenüber Anschmutzungen organischer Art, wie beispielsweise durch Reste von Lebensmitteln, Fetten und vor allem Fingerabdrücken, sind. Solche Verschmutzungen werden auf hochglänzenden Kunststoffoberflächen sehr leicht wahrgenommen und beeinflussen den dekorativen Effekt bzw. führen dazu, dass die Oberfläche schmutzig und unhygienisch wirkt.

Zur Einstellung des Glanzgrades und insbesondere zur Vermeidung von Anschmutzungen durch Fingerabdrücke werden Aminoplastharzoberflächen teilweise überlackiert. Hierfür stehen auch speziell entwickelte sogenannten Anti-Fingerprint-Beschichtungen zur Verfügung. Aber auch von dem Anti-Fingerprint-Effekt einmal abgesehen, bietet sich eine Lackierung der Aminoplastharzoberfläche mit einem matten Lack aus den oben genannten Gründen oftmals an. Die Holz- und Möbelindustrie ist einer der größten Verbraucher von stumpfmatten, matten oder seidenmatten UV-Lacken, die speziell für diesen Industriezweig entwickelt wurden. Als Mattierungsmittel werden beispielsweise synthetische Kieselsäuren eingesetzt. Darüber hinaus ist es bei UV-Lacken jedoch auch möglich, Matteffekte physikalisch, d.h. ohne Zugabe von Mattierungsmitteln zu erreichen. So kann man durch sogenannte Excimer-UV-Härtung besonders mikrostrukturierte und damit matte Oberflächen erzeugen (s. z.B. Jorge und Kiene. Holzbeschichtung. FARBE UND LACK, 2019, S. 132-133).

Aminogruppenhaltige Kunststoffoberflächen, und insbesondere Melaminoberflächen, werden von Verbrauchern manchmal auch deshalb als künstlich empfunden, weil sie sich "kalt anfühlen". Auch dies kann durch Strukturierung der Oberfläche oder Überlackierung verbessert werden.

Eine Lackierung kann auch dazu genutzt werden, um die mechanischen und chemischen Oberflächeneigenschaften vorteilhaft einzustellen. Insbesondere ist es bekannt, dass aminogruppenhaltige Kunststoffoberflächen eine vergleichsweise schlechte UV-, Witterungs- und Mikrokratzbeständigkeit aufweisen. Auch aus diesem Grund werden Aminoplastharzoberflächen in der Praxis oftmals mit widerstandsfähigeren UV-Lackaufbauten überlackiert. Aus dem Bereich der Parkettlackierung sind beispielsweise UV-Decklacke mit sehr hoher Lackhärte und Kratzfestigkeit bekannt. Bei Aminoplastharzoberflächen gilt es insbesondere die Mikrokratzbeständigkeit zu erhöhen.

EP 3 040 476 A1 beschreibt einen Schichtstoff zum Beschichten eines plattenförmigen Holzwerkstoffs und Verfahren zum Herstellen des Schichtstoffs.

WO 2010/079014 A2 beschreibt ein Bauelement aus Holzwerkstoff mit aufgedrucktem Dekor und unterschiedlichem Glanzgrad.

DE 10 2013 005 184 A1 beschreibt ein Verfahren zur Funktionalisierung einer Oberfläche.

EP 3 210 772 A1 beschreibt ein schmelzkaschiertes Dekorlaminat.

EP 3 415 318 A1 beschreibt ein Verfahren und Vorrichtung zur Herstellung eines dekorativen Werkstückes und Werkstück.

Leider war es im Stand der Technik bislang nicht möglich, in einfacher und kostengünstiger Weise die optischen und dekorativen Vorteile von strukturierten Werkstoffoberflächen aus aminogruppenhaltigen Kunststoffen mit denen der Lackierung mit strahlenhärtenden Lacken zu verbinden.

### ZUSAMMENFASSUNG DER ERFINDUNG

Aufgabe der vorliegenden Erfindung war es daher, strukturierte Lackoberflächen auf Werkstoffuntergründen aus aminogruppenhaltigen Kunststoffen in einfacher und kostengünstiger Weise zu erzielen.

Diese Aufgabe wird erfindungsgemäß gelöst durch den lackierbaren Werkstoff gemäß Anspruch 1, den lackierten Werkstoff gemäß Anspruch 11, die Verfahren zu deren Herstellung gemäß den Ansprüchen 19 und 20 sowie die Verwendung gemäß Anspruch 21. Besondere Ausgestaltungen der Erfindung sind in den abhängigen Ansprüchen wiedergegeben und werden nachstehend, wie auch der allgemeine Erfindungsgedanke, näher erläutert.

Die Erfindung stellt einen lackierbaren Werkstoff mit einer Oberfläche aus einem aminogruppenhaltigen Kunststoff bereit, wobei die Oberfläche strukturiert ist und zumindest ein Teil der Aminogruppen auf der strukturierten Oberfläche des aminogruppenhaltigen Kunststoffs durch Aufpfropfen eines Funktionalisierungsreagenzes kovalent mit Vinylgruppen funktionalisiert worden ist, wobei das Funktionalisierungsreagenz mindestens eine Vinylgruppe und mindestens eine gegenüber den Aminogruppen des aminogruppenhaltigen Kunststoffs reaktive Gruppe aufweist, wobei der Werkstoff mit einem vinylgruppen-vermittelten strahlenhärtenden Lack lackierbar ist.

Gemäß einer besonders bevorzugten Ausführungsform weist das Funktionalisierungsreagenz ein Molekulargewicht von 90 bis 2000, bevorzugt von 95 bis 1100 und insbesondere bevorzugt von 95 bis 600 auf.

Gemäß einer besonders bevorzugten Ausführungsform ist die weitere gegenüber den Aminogruppen des aminogruppenhaltigen Kunststoffs reaktive Gruppe im Funktionalisierungsreagenz ausgewählt aus der Gruppe bestehend aus Epoxiden, Anhydriden, Säurechloriden, Säureaziden, Sulfonylchloriden, Ketonen, Aldehyden, Carbonsäuren, Estern, insbesondere N-Hydroxysuccinimid-Estern, Imidoestern, oder Carbonaten, Carbodiimiden, Isocyanaten, Isothiocyanaten, Alkylhalogeniden, Arylhalogeniden, Alkinen und Vinylgruppen wie z.B. Acrylat, Methacrylat oder Acrylamid.

Gemäß einer besonders bevorzugten Ausführungsform ist die weitere gegenüber den Aminogruppen des aminogruppenhaltigen Kunststoffs reaktive Gruppe im Funktionalisierungsreagenz ebenfalls eine Vinylgruppe ist.

Gemäß einer besonders bevorzugten Ausführungsform ist die strukturierte Oberfläche des aminogruppenhaltigen Kunststoffs durch das Aufpfropfen mittels Auftragens des Funktionalisierungsreagenzes in einer Menge von weniger als 5 g/m², insbesondere weniger als 2 g/m² oder weniger als 1 g/m² sowie durch anschließendes Erwärmen oder Bestrahlen mit UV- oder Elektronenstrahlen funktionalisiert.

Gemäß einer besonders bevorzugten Ausführungsform ist das Funktionalisierungsreagenz ausgewählt aus der Gruppe bestehend aus Di-, Tri-, Tetra-, Penta- oder noch höherfunktionellen Acrylaten, Methacrylaten, Vinylethern und Allylethern, wobei das Funktionalisierungsreagenz insbesondere ausgewählt sein kann aus der Gruppe bestehend aus Trimethylolpropantriacrylat, Dipropylenglycoldiacrylat, Tripropylenglycoldiacrylat, Hexandioldiacrylat, Pentaerythrittetraacrylat, Dipentaerythritpentaacrylat, Dipentaerythrithexaacrylat Neopentylglycoldiacrylat, sowie propoxilierte oder ethoxilierte Varianten dieser Verbindungen, Polyalkylenglycoldiacrylate, insbesondere Polyethylenglycoldiacrylate, Divinylether, insbesondere Diethylenglycoldivinylether, Triethylenglycoldivinylether oder Cyclohexandimethanoldivinylether, und Diallylether.

Gemäß einer besonders bevorzugten Ausführungsform sind die Vinylgruppen in der Werkstoffoberfläche und/oder im Funktionalisierungsreagenz ausgewählt aus der Gruppe bestehend aus Acrylaten, Methacrylaten, Vinylether, Allylether sowie vinylaromatischen Verbindungen, wobei letztere insbesondere ausgewählt sein können aus Styrol, C₁₋₄-alkylsubstituiertem Styrol, Stilben, Vinylbenzyldimethylamin, (4-Vinylbenzyl)Dimethylaminoethylether, N,N-Dimethylaminoethylstyrol, tert-Butoxystyrol und Vinylpyridin.

Gemäß einer besonders bevorzugten Ausführungsform ist der aminogruppenhaltige Kunststoff ausgewählt aus der Gruppe bestehend aus Aminoplastharzen, Aminopolysiloxanen, Polyvinylaminen, Polyalkyleniminen, Aminoepoxidharzen und Polyurethanen mit endständigen Aminogruppen.

Gemäß einer besonders bevorzugten Ausführungsform ist der aminogruppenhaltige Kunststoff ein Aminoplastharz, insbesondere ein Melamin-Formaldehydharz oder ein Melamin-Harnstoff-Formaldehydharz.

Gemäß einer besonders bevorzugten Ausführungsform ist der Werkstoff ein bogen- oder plattenförmiger Werkstoff, insbesondere eine Holzwerkstoffplatte; ein mit einem aminogruppenhaltigen Kunststoff beschichteter Träger; ein imprägniertes oder beschichtetes Papier oder ein Laminat enthaltend ein oder mehrere imprägnierte oder beschichtete Papiere, insbesondere ein DPL, HPL oder CPL, eine Kompaktplatte oder ein anderer Schichtstoff.

Weiterhin stellt die Erfindung einen lackierten Werkstoff mit einer strukturierten Lackoberfläche bereit, der durch: (a) Bereitstellung eines erfindungsgemäßen lackierbaren Werkstoffs, (b) Auftragen einer Schicht eines vinylgruppen-vermittelten strahlenhärtenden Lacks auf die mit Vinylgruppen modifizierte, strukturierte Kunststoffoberfläche des Werkstoffs, (c) Strahlenhärtung der Lackschicht erhältlich ist.

Gemäß einer besonders bevorzugten Ausführungsform handelt es sich bei dem strahlenhärtenden Lack um einen Decklack und enthält der lackierte Werkstoff keine Lack-Primer- oder Grundierungsschicht.

Gemäß einer besonders bevorzugten Ausführungsform beträgt die Menge an insgesamt auf die Kunststoffoberfläche aufgetragenem strahlenhärtenden Lack weniger als 20 g/m², insbesondere weniger als 15 g/m² oder weniger als 10 g/m².

Gemäß einer besonders bevorzugten Ausführungsform ist die Lackschicht eine Excimer-gehärtete Lackschicht.

Gemäß einer besonders bevorzugten Ausführungsform ist die Lackschicht eine Excimer-gehärtete Lackschicht ist und weist einen Glanzwert von unter 10, vorzugsweise unter 5, jeweils gemessen nach EN ISO 2813 mit der 60°-Geometrie, auf.

Gemäß einer besonders bevorzugten Ausführungsform ist die Lackschicht ein matter Lack ist und weist einen Glanzwert von unter 10, vorzugsweise unter 5, jeweils gemessen nach EN ISO 2813 mit der 60°-Geometrie, auf.

Gemäß einer besonders bevorzugten Ausführungsform weist die strukturierte Werkstoffoberfläche bzw. die strukturierte Lackoberfläche einen Rz-Wert gemessen nach DIN EN ISO 4287 von mindestens 10 µm, insbesondere mindestens 15 µm oder mindestens 20 µm auf.

Gemäß einer besonders bevorzugten Ausführungsform des lackierbaren Werkstoffs bzw. des lackierter Werkstoffs ist die Oberflächenstruktur der strukturierten Werkstoffoberfläche bzw. der strukturierten Lackoberfläche eine ursprünglich durch Prägung, Kaschierung, Kalandrierung, Ätzung, Lasern oder Bedruckung erzeugte dekorative Struktur, die insbesondere die Oberflächenstruktur von Holz, Naturstein, Kunststein, Keramik, Metall, Mosaiken, Dielen, Fliesen, Fugen oder eine andere mit dem bloßen Auge sichtbare dekorative Struktur darstellt.

Weiterhin stellt die Erfindung ein Verfahren zur Herstellung eines erfindungsgemäßen lackierbaren Werkstoffs bereit, das die folgenden Schritte umfasst:
a) Bereitstellen eines Werkstoffs mit einer strukturierten Oberfläche aus einem aminogruppenhaltigen Kunststoff, wobei der Werkstoff mit einem vinylgruppen-vermittelten strahlenhärtenden Lack lackierbar ist,
b) kovalente Funktionalisierung der strukturierten Oberfläche mit Vinylgruppen durch
   (i) In-Kontakt-Bringen der strukturierten Oberfläche mit einem Funktionalisierungsreagenz, welches mindestens eine Vinylgruppe und mindestens eine weitere, gegenüber den Aminogruppen des aminogruppenhaltigen Kunststoffs reaktive Gruppe aufweist und
   (ii) Durchführung einer chemischen Reaktion zur Erzeugung einer kovalenten Bindung zwischen der zweiten reaktiven Gruppe des Funktionalisierungsreagenzes und einer Aminogruppe auf der strukturierten Oberfläche des aminogruppenhaltigen Kunststoffs, wodurch eine mit Vinylgruppen kovalent modifizierte strukturierte Oberfläche erhalten wird.

Weiterhin stellt die Erfindung ein Verfahren zur Herstellung eines erfindungsgemäßen lackierten Werkstoffs mit einer strukturierten Lackoberfläche bereit, das die folgenden Schritte umfasst:
a) Durchführung des erfindungsgemäßen Verfahrens zur Herstellung eines lackierbaren Werkstoffs oder Bereitstellung eines erfindungsgemäßen lackierbaren Werkstoffs,
b) Auftragen einer Schicht eines vinylgruppen-vermittelten strahlenhärtenden Lacks auf die mit Vinylgruppen funktionalisierte, strukturierte Oberfläche des Werkstoffs,
c) Strahlenhärtung der Lackschicht.

Weiterhin stellt die Erfindung eine Verwendung einer Vinyl-Funktionalisierung als Ersatz für eine Primerschicht oder Grundierung bei der Lackierung von strukturierten Oberflächen aus aminogruppenhaltigem Kunststoff mit vinylgruppen-vermittelten strahlenhärtenden Lacken_bereit.

Die Erfindung stellt einen Werkstoff mit einer strukturierten Oberfläche aus einem aminogruppenhaltigen Kunststoff bereit, bei dem zumindest ein Teil der Aminogruppen auf der strukturierten Oberfläche des aminogruppenhaltigen Kunststoffs durch Aufpfropfen eines Funktionalisierungsreagenzes kovalent mit Vinylgruppen funktionalisiert worden ist. Durch diese Oberflächenfunktionalisierung kann auf eine Primerschicht oder Grundierung verzichtet werden. Die erfindungsgemäße strukturierte Oberfläche ist direkt lackierbar. Aus diesem Grund wird dieser erste Gegenstand der Erfindung hierin auch als "lackierbarer Werkstoff" bezeichnet.

Herstellen lässt sich der erfindungsgemäße lackierbare Werkstoff durch das ebenfalls durch die Erfindung bereitgestellte Verfahren, welches folgende Schritte umfasst:
a) Bereitstellen eines Werkstoffs mit einer strukturierten Oberfläche aus einem aminogruppenhaltigen Kunststoff,
b) kovalente Funktionalisierung der strukturierten Oberfläche mit Vinylgruppen durch
   (i) In-Kontakt-Bringen der strukturierten Oberfläche mit einem Funktionalisierungsreagenz, welches mindestens eine Vinylgruppe und mindestens eine weitere, gegenüber den Aminogruppen des aminogruppenhaltigen Kunststoffs reaktive Gruppe aufweist und
   (ii) Durchführung einer chemischen Reaktion zur Erzeugung einer kovalenten Bindung zwischen der zweiten reaktiven Gruppe des Funktionalisierungsreagenzes und einer Aminogruppe auf der strukturierten Oberfläche des aminogruppenhaltigen Kunststoffs, wodurch eine mit Vinylgruppen kovalent modifizierte strukturierte Oberfläche erhalten wird.

Der Vorteil des von der Erfindung bereitgestellten lackierbaren Werkstoffs ist, dass er durch den Verzicht auf eine Primerschicht oder Grundierung mit einer entsprechend dünneren Lackschicht lackiert werden kann, wodurch die ursprünglich im Untergrund bereits vorhandene Struktur nach der Lackierung erhalten bleibt. Erstmals können so strukturierte Lackoberflächen auf aminogruppenhaltigen Kunststoffen in besonders einfacher und kosteneffektiver Weise hergestellt werden.

Dementsprechend stellt die Erfindung auch einen lackierten Werkstoff mit einer strukturierten Lackoberfläche bereit, welcher durch Lackierung des erfindungsgemäßen lackierbaren Werkstoffs erhalten werden kann. Das Verfahren zur Herstellung des erfindungsgemäßen lackierten Werkstoffs umfasst die Schritte:
(a) Bereitstellung eines erfindungsgemäßen lackierbaren Werkstoffs,
(b) Auftragen einer Schicht eines strahlenhärtenden Lacks auf die mit Vinylgruppen modifizierte, strukturierte Kunststoffoberfläche des lackierbaren Werkstoffs, und
(c) Strahlenhärtung der Lackschicht.

Die Erfindung umfasst daher insbesondere auch die Verwendung einer Vinyl-Funktionalisierung als Ersatz für eine Primerschicht oder Grundierung bei der Lackierung von strukturierten Oberflächen aus aminogruppenhaltigem Kunststoff. Hierdurch kann eine deutliche Reduzierung in der Lackschichtdicke erreicht werden, wodurch es erstmals möglich ist, auch strukturierte Untergründe unter Beibehaltung der Oberflächenstruktur zu lackieren.

### DETAILLIERTE BESCHREIBUNG DER ERFINDUNG

### Aminogruppenhaltiger Kunststoff

Wenn hier von "aminogruppenhaltigem Kunststoff" die Rede ist, dann ist damit jeder Kunststoff gemeint, der primäre und/oder sekundäre Aminogruppen im Molekülaufbau aufweist. Kunststoff ist gemäß seiner üblichen Bedeutung als Polymermaterial zu verstehen. Wenn hier nicht weiter angegeben, bedeutet "Kunststoff" oder "Harz" immer ein festes, ausgehärtetes Kondensationsprodukt. Gemäß einer bevorzugten Ausführungsform weist der aminogruppenhaltige Kunststoff primäre Aminogruppen auf. Diese können sich insbesondere an den Enden des Polymermoleküls befinden. Gemäß einer anderen bevorzugten Ausführungsform weist der aminogruppenhaltige Kunststoff sekundäre Aminogruppen auf. Mit diesen funktioniert die erfindungsgemäße Funktionalisierung überraschenderweise ebenfalls sehr gut. In einer Ausführungsform findet die Funktionalisierung über die sekundären Aminogruppen des aminogruppenhaltige Kunststoffs statt. Aminogruppenhaltige Kunststoffe sind dem Fachmann bekannt. Diese können beispielsweise ausgewählt sein aus der Gruppe bestehend aus Aminoplastharzen, Aminopolysiloxanen, Polyvinylaminen, Polyalkyleniminen, aminmodifizierten Epoxidharzen und Polyurethanen mit endständigen Aminogruppen.

Gemäß einer besonders bevorzugten Ausführungsform handelt es sich bei dem aminogruppenhaltigen Kunststoff um ein Aminoplastharz, insbesondere um ein Melamin-Formaldehydharz. Aminoplastharze sind sehr vielseitige Kunststoffe, die in den unterschiedlichsten Zusammensetzungen und Formen eingesetzt werden. Um die Oberflächenbeständigkeit von Schichtstoffen, Laminaten und/oder Holzwerkstoffen zu erhöhen, ist es bekannt, deren Oberfläche mit einer Schicht Aminoplastharz (in der Praxis typischerweise ein Melamin-Formaldehydharz), beispielsweise in Form eines sogenannten Flüssig-Overlays oder getränkten Overlaypapiers, zu beschichten. Auch für die darunterliegenden Schichten werden in der Praxis meist Aminoplastharze als Tränkharze oder Bindemittel verwendet. Dem in der holzverarbeitenden Industrie tätigen Fachmann sind Aminoplastharze neben dem Imprägnieren, Tränken und/oder Beschichten von Oberflächen vor allem auch als Leime, z.B. für die Span- oder Faserplattenherstellung, allgemein bekannt. Auch hier treten Oberflächen aus aminogruppenhaltigen Kunststoffen auf. Aminoplastharze können jedoch auch in Pulverform auf Trägermaterialien aufgebracht und mit diesen verpresst werden. Alle diese dem Fachmann bekannten Anwendungen von Aminoplastharzen führen zu Werkstoffen mit Oberflächen aus einem aminogruppenhaltigem Kunststoff im Sinne der Erfindung.

Aminoplastharze bzw. Aminoplaste werden in "Ullmanns Enzyklopädie der technischen Chemie", 4. Auflage, 1974, im Kapitel "Aminoplaste" in Band 7 oder in "Holzwerkstoffe und Leime" von Dunky und Niemz, 1. Auflage, 2002, in Band I, Teil II, Kapitel 1 beschrieben. Unter dem Begriff Aminoplaste versteht man allgemein Kondensationsprodukte, die durch Umsetzung einer Carbonylverbindung, in der Praxis meist Formaldehyd, mit einer Amino-, Imino- oder Amidgruppen enthaltenden Komponente erhalten werden.

Erfindungsgemäß wichtigste Vertreter der Aminoplastharze sind Melamin-Formaldehydharze. Hierzu zählen alle Aminoplastharze, die zumindest aus Melamin und Formaldehyd gebildet sind, also beispielsweise auch die Melamin-Harnstoff-Formaldehydharze. Letztere sind Aminoplastharze, die zumindest aus Melamin, Harnstoff und Formaldehyd gebildet sind. Melamin-Formaldehydharze können neben Melamin und Formaldehyd auch noch weitere Komponenten enthalten, insbesondere weitere Carbonyl- und Amino-, Imino- oder Amidgruppen enthaltenden Komponenten sowie Additive und/oder Lösungsmittel. Melamin-Formaldehydharze, die vom Fachmann auch einfach als Melaminharz oder Melaminoberflächen bezeichnet werden, haben sich insbesondere in der Möbelherstellung und bei Materialien für den Innenausbau als Oberflächen durchgesetzt. Gerade hier besteht ein großer Bedarf sowohl an strukturierten als auch lackierten Oberflächen wie eingangs erläutert. Gerade bei melaminhaltigen Aminoplastharzoberflächen stellt sich das eingangs erläuterte Problem des unerwünschten Glanzgrades und der damit verbundenen künstlich wirkenden Optik und Haptik in besonderem Maße.

Polyvinylamine werden über polymeranaloge Reaktionen wie durch Hydrolyse von Poly-N-vinylamiden, wie Poly-N-vinylformamid oder Poly-N-vinylacetamid, oder Poly-N-vinylimiden, wie Poly-N-vinylsuccinimid, hergestellt, die durch die Polymerisation der entsprechenden Monomere leicht zugänglich sind, oder durch Hofmann-Abbau aus Polyacrylamid hergestellt.

Bei Polyalkyleniminen handelt es sich um Polymere mit einem durch Alkylengruppen verbundenen N-Atom-haltigen Rückgrat, das an den nicht N-Atomen Alkylgruppen tragen kann. Das Polyalkylenimin weist an den Enden vorzugsweise primäre Aminofunktionen und im Inneren vorzugsweise sowohl sekundäre als auch tertiäre Aminofunktionen auf; gegebenenfalls kann es im Inneren auch lediglich sekundäre Aminofunktionen aufweisen, so dass sich nicht ein verzweigtkettiges, sondern ein lineares Polymer ergibt. Das Verhältnis von primären zu sekundären Aminogruppen im Polyalkylenimin liegt vorzugsweise im Bereich von 1:0,5 bis 1:1,5, insbesondere im Bereich von 1:0,7 bis 1:1. Das Verhältnis von primären zu tertiären Aminogruppen im Polyalkylenimin liegt vorzugsweise im Bereich von 1:0,2 bis 1:1, insbesondere im Bereich von 1:0,5 bis 1:0,8.

Aminoepoxidharze werden durch Umsetzung von Epoxidharzen mit Polyaminen als Härter erhalten, wobei die Reaktionsbedingungen so gewählt werden, dass endständige Aminogruppen nach der Umsetzung im Harz verbleiben. Epoxidharze sind Kunstharze, die Epoxidgruppen tragen. Sie sind härtbare Harze (Reaktionsharze), die mit einem Härter und gegebenenfalls weiteren Zusatzstoffen zu einem duroplastischen Kunststoff umgesetzt werden können. Die Epoxidharze sind Polyether mit in der Regel zwei endständigen Epoxidgruppen. Die Härtungsmittel sind Reaktionspartner und bilden zusammen mit dem Harz den makromolekularen Kunststoff. Aminoepoxidharze wie hier verwendet stellen einen solchen makromolekularen Kunststoff dar, der durch Umsetzung von Epoxidharzen mit Polyaminen als Härter erhalten wurde. Dabei werden die Reaktionsbedingungen so gewählt, dass endständige Aminogruppen nach der Umsetzung im Harz verbleiben.

Polyurethane mit endständigen Aminogruppen können erhalten werden durch Umsetzung von Polyurethan mit Rest-NCO-Gruppen im Polyurethan mit Diaminen.

### Werkstoff

Der Begriff "Werkstoff" wie hier verwendet umfasst jeden Formkörper, der einer Lackierung unterzogen werden kann. Es kann sich dabei beispielsweise um ein Möbelbauteil oder ein Bauteil handeln, welches zur Verkleidung von Fußböden, Wänden oder Decken geeignet ist. Wie eingangs erläutert ist es gerade bei diesen oftmals wünschenswert, deren Oberflächen mit einer Stukturierung zu versehen, sodass diese nicht nur die Optik, sondern auch die Haptik von natürlichen Vorbildern wie Holz, Keramik oder Stein aufweisen. Dazu ist es im Stand der Technik bekannt, entsprechend strukturierte Dekore auf Werkstoffen für Möbel- oder Bauteile zu erzeugen.

In einer bevorzugten Ausführungsform ist der erfindungsgemäß lackierbare oder lackierte Werkstoff eine Holzwerkstoffplatte; ein mit einem aminogruppenhaltigen Kunststoff beschichteter Träger; ein imprägniertes oder beschichtetes Papier oder ein Laminat enthaltend ein oder mehrere imprägnierte oder beschichtete Papiere, insbesondere ein DPL, HPL oder CPL, eine Kompaktplatte oder ein anderer Schichtstoff.

Bei dem erfindungsgemäß lackierbaren oder lackierten Werkstoff handelt es sich vorzugsweise um einen bogen- oder plattenförmigen Werkstoff. Es sind aber auch andere Geometrien möglich, insbesondere kann der Werkstoff auch ein komplexeres dreidimensionales Formteil sein. Der Werkstoff, insbesondere wenn er bogen- oder plattenförmig ist, eignet sich gemäß einer bevorzugten Ausführungsform zur Herstellung von Möbeloberflächen oder zur Verkleidung von Fußböden, Wänden oder Decken.

Bogen- oder plattenförmige Werkstoffe haben den Vorteil, dass sie über eine weitestgehend flache Oberfläche verfügen. Diese kann in relativ einfacher Weise und mit hohem Durchsatz mit einer Strukturierung versehen werden, beispielsweise durch Verwendung von strukturierten Pressblechen bei der Herstellung oder durch anschließende Kaschierung, Kalandrierung mit einer strukturgebenden Walze, Ätzung, Lasern oder dreidimensionale Bedruckung. Auch das erfindungsgemäße Funktionalisierungsreagenz und die anschließende Lackierung können auf bogen- oder plattenförmige Werkstoffe besonders gleichmäßig und flächig aufgetragen werden, beispielsweise durch Walzen, Sprühen, Spritzen, Fluten, Tauchen, Gießen, Rakeln und/oder Aufstreichen.

Der bogenförmige Werkstoff kann auf eine Rolle aufgerollt oder in Bögen abgelegt gelagert werden Es kann sich bei dem bogenförmigen Werkstoff insbesondere um ein Imprägnat oder einen Schichtstoff handeln.

In einer bevorzugten Ausführungsform handelt es sich bei dem erfindungsgemäßen Werkstoff um ein mit einem aminogruppenhaltigem Kunststoff (insbesondere einem Aminoplastharz) imprägniertes und/oder beschichtetes Papier. Der Fachmann bezeichnet dies auch als "Imprägnat". Gemäß einer anderen bevorzugten Ausführungsform handelt es sich bei dem erfindungsgemäßen Werkstoff um ein Laminat enthaltend mehrere mit einem aminogruppenhaltigem Kunststoff (insbesondere einem Aminoplastharz) imprägnierte und/oder beschichtete Papiere oder ein Laminat enthaltend ein oder mehrere solcher Papiere und ein Trägermaterial. Laminate von mehreren imprägnierten und/oder beschichteten Papieren und ggf. Trägern werden als Schichtstoffe bezeichnet. Sowohl Imprägnate als auch Laminate bzw. Schichtstoffe finden vielfachen Einsatz bei der Herstellung von Möbeloberflächen oder zur Verkleidung von Fußböden, Wänden oder Decken, insbesondere zur Herstellung von Fußbodenpaneelen.

Laminat, wie hier verwendet, bezeichnet ein Erzeugnis, das mindestens zwei flächig miteinander verbundene Schichten umfasst. Diese Schichten können aus gleichen oder unterschiedlichen Materialien bestehen. Erfindungsgemäße Laminate weisen einen schichtweisen Aufbau auf, wobei die oberste Schicht ein mit einem Aminoplastharz imprägniertes Dekorpapier, Overlaypapier oder eine eigens aufgetragene Schicht Aminoplastharz, beispielsweise in Form eines sogenannten Flüssig-Overlays, aufweist. Bei dem Aminoplastharz handelt es sich bevorzugt um ein Melamin-Formaldehydharz. Overlaypapier und Flüssig-Overlay Schichten dienen dem Schutz der Oberfläche vor äußeren Einflüssen wie Abnutzung und Verkratzung.

Das Laminat wird dabei vorzugsweise erhalten, indem eine oder mehrere Lagen mit einem aminogruppenhaltigem Kunststoff (insbesondere einem Aminoplastharz) imprägnierten und/oder beschichteten Papier zusammen mit gegebenenfalls weiteren mit Kunstharz imprägnierten Papieren und gegebenenfalls einer Trägerplatte unter Druck und Wärmeeinwirkung miteinander verpresst werden. Dabei wird die erfindungsgemäß vorgesehene strukturierte Oberfläche aus einem aminogruppenhaltigen Kunststoff vorzugsweise dadurch erzielt, dass bei der Herstellung des Laminats die Struktur durch Prägung mit einem strukturierten Pressblech oder Kalandrierung mit einer strukturierten Walze in die Oberfläche aus einem aminogruppenhaltigen Kunststoff eingebracht wird. Die Oberfläche aus aminogruppenhaltigem Kunststoff wird vorzugsweise gebildet durch ein an der Oberfläche des Laminats angeordnetes, mit einem aminogruppenhaltigem Kunststoff (insbesondere Aminoplastharz) imprägnierten und/oder beschichteten Papier oder einer Schicht eines Flüssigoverlays aus aminogruppenhaltigem Kunststoff (insbesondere Aminoplastharz).

Wenn es sich bei dem Werkstoff um ein Laminat handelt, kann dieses insbesondere als "Direct Pressure Laminate" (DPL), "High Pressure Laminate" (HPL) oder "Continuous Pressure Laminate" (CPL) ausgebildet sein. DPL werden hergestellt, indem eine oder mehrere Lagen kunstharzimprägnierte Papiere mit einer Trägerplatte unter Druck und Wärmeeinwirkung miteinander verpresst werden. HPL werden hergestellt, indem mehrere Lagen kunstharzimprägnierter Papiere unter Druck und Wärmeeinwirkung in einer Ein- oder Mehretagenpresse miteinander verpresst werden. Es handelt sich somit um eine besondere Ausführungsform eines Schichtstoffes. Das HPL kann anschließend auf eine Trägerplatte aufgeleimt, kaschiert oder mit dieser unter Druck und Wärmeeinwirkung verpresst werden. CPL werden hergestellt, indem mehrere Lagen kunstharzimprägnierter Papiere in einer kontinuierlich arbeitenden Presse, in der Regel einer Doppelbandpresse, unter Druck und Wärmeeinwirkung miteinander verpresst werden. Auch beim CPL handelt es sich somit um eine besondere Ausführungsform eines Schichtstoffes. Eine Sonderform des CPL ist das kontinuierliche Verpressen von einer oder mehreren Lagen kunstharzimprägnierter Papiere mit einer Trägerplatte. Alle genannten Technologien werden für die Herstellung von Möbeloberflächen oder zur Herstellung von Bauteilen zur Verkleidung von Fußböden, Wänden oder Decken, insbesondere bei der Laminatfußbodenherstellung, eingesetzt. Als Kunstharze werden für die Imprägnierungen der inneren Papierschichten häufig Phenolharze eingesetzt. Zumindest an der Oberfläche der Laminate oder Schichtstoffe befinden sich jedoch ein oder mehrere mit einem aminogruppenhaltigen Kunststoff, insbesondere einem Melamin-Formaldehydharz, imprägnierte Papiere, insbesondere Dekorpapier und Overlaypapier. Bei letzterem handelt es sich um ein transparentes, mit Melamin-Formaldehydharz imprägniertes Papier, das als Schutzschicht dient und zusätzliche antiabrasive Komponenten enthalten kann. Ein Dekorpapier ist ein bedrucktes oder gefärbtes Spezialpapier, das in mit Aminoplastharz imprägnierter Form zur dekorativen Beschichtung von Holzwerkstoffen verwendet wird.

Bei dem erfindungsgemäßen Werkstoff kann es sich um eine Kompaktplatte handeln. Hierunter wird eine Schichtstoffpressplatte verstanden, die ähnlich wie HPL hergestellt wird, indem mehrere Lagen kunstharzimprägnierter Papiere unter Druck und Wärmeeinwirkung miteinander verpresst werden. Während HPL-Schichtstoffe primär als Beschichtungsmaterial dienen und auf Trägermaterialien aufgebracht werden, können Kompaktplatten beidseitig gestaltet werden und kommen ohne Trägermaterial zum Einsatz. Kompaktplatten werden nach DIN abgekürzt DKS für Dekorativer Kunststoff-Schichtpressstoff. Sie bestehen in der Regel aus mehreren Papier- oder Gewebeschichten, die im Kern in Phenolharz und als Randschichten in Melamin-Formaldehydharz getränkt und anschließend unter Hitze und Druck zusammengefügt werden.

Bei der Holzwerkstoffplatte kann es sich um eine Span-, OSB- oder Faserplatte handeln. Diese haben gemein, dass bei ihrer Herstellung lignocellulosehaltige Partikel (Späne, Strands oder Fasern) mit Bindemittel beleimt und anschließend zum Holzwerkstoff verpresst werden. OSB-Platten (englisch für oriented strand board bzw. oriented structural board, "Platte aus ausgerichteten Spänen"), sind Grobspanplatten, die aus langen, schlanken Spänen ("Strands") hergestellt werden. Span-, OSB- oder Faserplatten sind größtenteils aminoplastisch gebundene Holzwerkstoffplatten.

Um eine Oberfläche aus einem aminogruppenhaltigen Kunststoff aufzuweisen, ist die Holzwerkstoffplatte entweder mit einem aminogruppenhaltigen Kunststoff als Bindemittel hergestellt oder anschließend mit einem aminogruppenhaltigen Kunststoff oder einem Imprägnat oder Laminat bzw. Schichtstoff enthaltend eine Oberfläche aus einem aminogruppenhaltigen Kunststoff beschichtet worden. Bei dem aminogruppenhaltigen Kunststoff handelt es sich vorzugsweise um ein Aminoplastharz, insbesondere ein Melamin-Formaldehyd- oder Melamin-Harnstoff-Formaldehydharz. Gemäß einer bevorzugten Ausführungsform handelt es sich bei dem Werkstoff um eine Holzwerkstoffplatte, die mit einem Aminoplastharz-imprägnierten Papier beschichtet ist, welches nach Prägung beim Verpressen zur Werkstoffplatte die strukturierte Aminoplastharzoberfläche der Holzwerkstoffplatte darstellt. Dies entspricht der oben beschriebenen DPL-Ausführungsform.

Bei dem erfindungsgemäßen Werkstoff kann es sich auch ganz allgemein um einen mit einem aminogruppenhaltigen Kunststoff beschichteten Träger handeln.

Wenn hier oder an anderer Stelle von "Träger", "Trägermaterial" oder "Trägerplatte" die Rede ist, kann dies insbesondere eine Holzwerkstoff-, mineralische Werkstoff-, Metall- oder Kunststoffplatte sein. Dies gilt gerade auch für die zuvor beschriebenen DPL-, HPL- und CPL-Ausführungsformen. Dabei bezeichnen die Angaben "Holz", "mineralisch", "Metall" und "Kunststoff" die mengenmäßige (Gew.-%) Hauptkomponente der Trägerplatte. Die Trägerplatte selbst kann auch ein Laminat oder Schichtstoff darstellen.

Wenn hier oder an anderer Stelle von "Beschichten" oder "Beschichtung" mit dem aminogruppenhaltigen Kunststoff die Rede ist, wird darunter jede Form der Beschichtung verstanden. Der aminogruppenhaltige Kunststoff kann flüssig, beispielsweise in Form seiner Monomere oder Präkondensate, aufgetragen und anschließend gehärtet werden. Der aminogruppenhaltige Kunststoff kann jedoch auch pulverfömig als Schicht aufgebracht und anschließend gebunden, geschmolzen oder gehärtet werden. Unter "Beschichten" oder "Beschichtung" wird hier ganz allgemein sowohl das Auftragen einer Schicht aminogruppenhaltigen Kunststoffs als auch das Verpressen oder Laminieren mit einem oder mehreren mit einem aminogruppenhaltigen Kunststoff (insbesondere einem Aminoplastharz) imprägnierten und/oder beschichteten Papier verstanden.

### Funktionalisierung mit Vinylgruppen

Ein Kernaspekt der Erfindung besteht darin, die strukturierte, aus einem aminogruppenhaltigen Kunststoff bestehende Oberfläche des Werkstoffs durch Funktionalisierung mit Vinylgruppen direkt lackierbar zu machen. Hierdurch kann auf zusätzliche Primer- oder Grundierungsschichten verzichtet werden. Dies hat bei strukturierten Substraten den Vorteil, dass die Oberflächenstrukturierung auch nach der Lackierung erhalten bleibt.

Um dies zu ermöglichen, wird erfindungsgemäß zumindest ein Teil der Aminogruppen auf der strukturierten Oberfläche des aminogruppenhaltigen Kunststoffs durch Aufpfropfen eines Funktionalisierungsreagenzes kovalent mit Vinylgruppen funktionalisiert. Das Aufpfropfen erfolgt dadurch, dass die strukturierte Werkstoffoberfläche, die einen aminogruppenhaltigen Kunststoff aufweist, mit dem Funktionalisierungsreagenz in Kontakt und zur Reaktion gebracht wird. Der aminogruppenhaltige Kunststoff wird also im ausgehärteten Zustand und damit lediglich an seiner Oberfläche kovalent mit Vinylgruppen funktionalisiert.

Der erhaltene erfindungsgemäße lackierbare Werkstoff weist an seiner Oberfläche Vinylgruppen auf, die kovalent in dem sich an seiner Oberfläche befindenden aminogruppenhaltigen Kunststoff verankert sind. Damit wird eine besonders gute Haftung für strahlenhärtende Lacke erzielt, die ebenfalls über Vinylgruppen radikalisch aushärten. Im erfindungsgemäßen lackierten Werkstoff (s.u.) ist die Lackschicht damit kovalent im aminogruppenhaltigen Kunststoff, der sich an der Oberfläche des Werkstoffs befindet, verankert. Dies führt zu einer besonders guten Adhäsion der Lackschicht und erlaubt, auf eine Primer- oder Grundierungsschicht zu verzichten.

Der Begriff "Vinylgruppe" umfasst im Rahmen der vorliegenden Erfindung jede funktionale Gruppe, die eine endständige C=C-Doppelbindung aufweist. Eine derartige Doppelbindung ist geeignet, um an der durch Strahlenhärtung initiierten radikalischen Polymerisation eines strahlenhärtenden Lackes teilzunehmen.

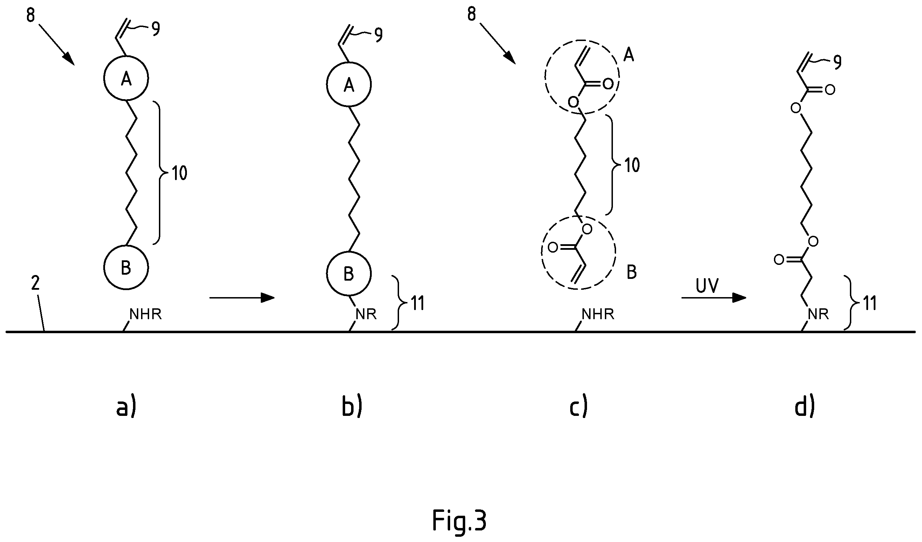

Funktionalisierungsreagenz, wie hier verwendet, bedeutet ein Molekül, welches auf eine Aminogruppe, die sich auf der strukturierten Oberfläche des aminogruppenhaltigen Kunststoffs befindet, aufgepfropft werden kann. Indem das Funktionalisierungsreagenz zusätzlich zu dieser Aufpfropfungsfunktionalität auch noch mindestens eine Vinylgruppe aufweist, wird die strukturierte Oberfläche des aminogruppenhaltigen Kunststoffs durch das Aufpfropfen des Funktionalisierungsreagenzes mit Vinylgruppen funktionalisiert. Das Funktionalisierungsreagenz ist damit ein mindestens bifunktionelles Molekül (s. Fig. 3a und 3c). Als erste funktionelle Gruppe A weist es eine Vinylgruppe auf. Als zweite funktionelle oder reaktive Gruppe B weist das Funktionalisierungsreagenz eine gegenüber den Aminogruppen des aminogruppenhaltigen Kunststoffs reaktive Gruppe auf. Das Funktionalisierungsreagenz weist also mindestens eine Vinylgruppe und mindestens eine weitere gegenüber den Aminogruppen des aminogruppenhaltigen Kunststoffs reaktive Gruppe auf. Das Aufpfropfen des Funktionalisierungsreagenzes besteht darin, dass die weitere funktionelle Gruppe B mit einer Aminogruppe an der Oberfläche des aminogruppenhaltigen Kunststoffs unter Ausbildung einer kovalenten Bindung reagiert hat. Dadurch werden Vinylgruppen auf Aminogruppen aufgepfropft, die sich auf der strukturierten Oberfläche des Werkstoffs befinden. Wenn hier von Aminogruppen die Rede ist, so sind damit insbesondere im aminogruppenhaltigen Kunststoff vorhandene endständige -NH₂ Gruppen gemeint.

Zum Aufpfropfen wird die strukturierte Werkstoffoberfläche, die einen aminogruppenhaltigen Kunststoff aufweist, mit dem Funktionalisierungsreagenz in Kontakt und zur Reaktion gebracht.

Der erste Schritt in der kovalenten Funktionalisierung der strukturierten Oberfläche mit Vinylgruppen besteht somit in dem In-Kontakt-Bringen der strukturierten Oberfläche mit einem Funktionalisierungsreagenz, welches mindestens eine Vinylgruppe und mindestens eine weitere, gegenüber den Aminogruppen des aminogruppenhaltigen Kunststoffs reaktive Gruppe aufweist. Das In-Kontakt-Bringen erfolgt über das Auftragen des Funktionalisierungsreagenzes auf die strukturierte Werkstoffoberfläche, die einen aminogruppenhaltigen Kunststoff aufweist. Das Auftragen kann auf vielfältige Weise erfolgen. Erfindungsgemäß hat sich gezeigt, dass schon punktuelle Funktionalisierungen der Oberfläche mit Vinylgruppen ausreichen, um als reaktive Bindungsanker für die später aufzutragende Schicht aus strahlenhärtendem Lack zu einer erheblichen Verbesserung der Adhäsion zu führen. Vorzugsweise erfolgt jedoch ein flächiges Auftragen des Funktionalisierungsreagenzes auf die strukturierte Oberfläche des aminogruppenhaltigen Kunststoffs. Das Auftragen des Funktionalisierungsreagenzes kann z.B. durch Walzen, Sprühen, Spritzen, Tränken, Gießen, Rakeln und/oder Aufstreichen erfolgen.

Der zweite Schritt in der kovalenten Funktionalisierung der strukturierten Oberfläche mit Vinylgruppen besteht im Zur-Reaktion-Bringen des Funktionalisierungsreagenzes mit zumindest einem Teil der sich an der Oberfläche des strukturierten Werkstoffs befindenden primären und/oder sekundären Aminogruppen. Dieser Schritt beinhaltet die Durchführung einer chemischen Reaktion zur Erzeugung einer kovalenten Bindung zwischen der zweiten reaktiven Gruppe des Funktionalisierungsreagenzes und einer Aminogruppe auf der strukturierten Oberfläche des aminogruppenhaltigen Kunststoffs, wodurch eine mit Vinylgruppen kovalent modifizierte strukturierte Oberfläche erhalten wird.

Dabei erfolgt das Zur-Reaktion-Bringen unter Reaktionsbedingungen, die eine kovalente Verbindung zwischen der weiteren reaktiven Gruppe B des Funktionalisierungsreagenzes und den endständigen Aminogruppen des Aminoplastharzes ermöglichen. Die Reaktionsbedingungen hängen von der Chemie der weiteren reaktiven Gruppe B ab. In vielen Fällen wird eine Erwärmung der Werkstoffoberfläche erforderlich sein. Dies kann über Heizstrahler oder Öfen erzielt werden. Bevorzugt wird die Werkstoffoberfläche nach dem Auftragen des Funktionalisierungsreagenzes auf eine Oberflächentemperatur von 30 °C bis 100 °C, bevorzugt von 50 °C bis 80 °C und besonders bevorzugt von 60 °C bis 70 °C erwärmt.

In anderen Fällen (wie beispielsweise bei der weiter unten näher erläuterten Aza-Michael-Addition) reicht erfindungsgemäß ein Bestrahlen der Oberfläche mit energiereicher Strahlung aus. Die Strahlungsdosis beträgt vorzugsweise mindestens 100 mJ/cm², vorzugsweise mindestens 150 mJ/cm². Bei reflektierenden Oberflächen sind letztere Dosen erforderlich (z.B. bei weißen Oberflächen). Gute Ergebnisse haben sich eingestellt wenn die Strahlungsdosis in einem Bereich von 100 bis 1000, vorzugsweise von 150 bis 600 mJ/cm² lag. Bei der energiereichen Strahlung handelt es sich in der Praxis üblicherweise um UV- oder Elektronenstrahlen. Unter UV-Strahlung werden erfindungsgemäß die Wellenlängenbereiche der UVB-Strahlung (280-320 nm), der UVA2-Strahlung (320-340 nm) und die UVA1-Strahlung (340-400 nm) zusammengefasst. Auch die UVC-Strahlung (200-280 nm), die Vakuum UV-Strahlung (100-200 nm), die spezielle Excimer-Strahlung (172 nm) und die extreme UV-Strahlung (1-100 nm) sind unter dem Begriff UV-Strahlung zusammengefasst. Vorzugsweise handelt es sich bei der energiereichen Strahlung um eine solche mit einer Wellenlänger von 280 nm oder weniger. Besonders praxisgerecht ist UV-C Strahlung.

Abhängig von der Art der Aufpfropfungsreaktion kann es auch erforderlich sein, das Funktionalisierungsreagenz zusammen mit benötigten Katalysatoren, Additiven oder Lösungsmitteln in einer Zusammensetzung oder getrennt von einander aufzutragen. Ob die Aufpfropfungsreaktion erfolgreich war, kann der Fachmann einfach nachprüfen, indem er die Haftung einer Lackschicht auf der mit dem Funktionalisierungsreagenz behandelten Werkstoffoberfläche untersucht. Nur wenn es zu einer kovalenten Funktionalisierung mit Vinylgruppen - und damit zu einem Aufpfropfen des Funktionalisierungsreagenzes - gekommen ist, wird eine sehr gute Haftung auch ohne die sonst erforderliche Lackprimer- oder Grundierungsschicht erzielt.

Abhängig vom Umsetzungsgrad und der Auftragsmenge des Funktionalisierungsreagenzes kann es empfehlenswert sein, überschüssiges nicht kovalent angeknüpftes Funktionalisierungsreagenz nach der Reaktion zumindest teilweise wieder von der Oberfläche zu entfernen, bevor diese mit einer Lackschicht versehen wird. Das Entfernen kann einfach durch Abwaschen mit einem geeigneten Lösungsmittel oder Abwischen der Oberfläche erfolgen. In der praktischen Erprobung der Erfindung hat sich jedoch gezeigt, dass dies in vielen Fällen nicht notwendig ist, da es zum einen bei Wahl der richtigen Auftragsmengen und Reaktionsbedingungen zu einer nahezu vollständigen Reaktion kommt und andererseits die Funktionalisierungsreagenzien aufgrund der zwingend vorhandenen Vinylgruppe auch bei der radikalischen Polymerisation eines strahlenhärtenden Lackes mit in die Lackschicht einpolymerisieren und daher die Lackfilmbildung nicht stören.

Wegen der vielfältigen Aufpfropfchemie, die für Aminogruppenfunktionalisierungen zur Verfügung steht, ist auch die Zahl der Möglichkeiten für die reaktive Gruppe B und die damit verbundenen Reaktionswege entsprechend groß. Die weitere gegenüber den Aminogruppen des aminogruppenhaltigen Kunststoffs reaktive Gruppe B des Funktionalisierungsreagenzes kann insbesondere ausgewählt sein aus der Gruppe bestehend aus Epoxiden, Säureanhydriden, Säurechloriden, Säureaziden, Sulfonylchloriden, Ketonen, Aldehyden, Carbonsäuren, Estern, insbesondere N-Hydroxysuccinimid-Estern, Imidoestern, oder Carbonaten, Carbodiimiden, Isocyanaten, Isothiocyanaten, Alkylhalogeniden, Arylhalogeniden, Alkinen und Vinylgruppen wie z.B. Acrylat, Methacrylat oder Acrylamid. Alle diese funktionellen Gruppen sind in der Lage, unter dem Fachmann wohlbekannten Bedingungen mit Aminogruppen zu reagieren. Die meisten dieser Gruppen reagieren mit primären oder sekundären Aminen durch Acylierung zum Säureamid oder durch Alkylierung zum sekundären (oder tertiären) Amin. Die Reaktionsmechanismen und -bedingungen sind dem Fachmann bekannt und lassen sich in den einschlägigen Lehrbüchern der organischen Chemie oder den entsprechenden Fachzeitschriften nachschlagen.

Gemäß einer besonders bevorzugten Ausführungsform handelt es sich bei der gegenüber den Aminogruppen des aminogruppenhaltigen Kunststoffs reaktiven Gruppe im Funktionalisierungsreagenz um eine Vinylgruppe. In dieser besonders bevorzugten Ausführungsform umfasst das Funktionalisierungsreagenz somit mindestens zwei Vinylgruppen. Die erste dient der Verankerung im aminogruppenhaltigen Kunststoff, die zweite bleibt auch nach dem Aufpfropfen erhalten und dient der späteren Verankerung des aufzutragenden strahlenhärtenden Lacks. Die erste und zweite Vinylgruppen können identisch oder unterschiedlich voneinander sein, bevorzugt sind sie identisch. Besonders bevorzugt ist das Funktionalisierungsreagenz ein spiegelsymmetrisches Molekül mit mindestens zwei Vinylgruppen.

Die dieser Erfindung zugrunde liegende Forschung hat gezeigt, dass sich Vinylgruppen ganz hervorragend zum Aufpfropfen von Funktionalisierungsreagenzien auf strukturierte aminogruppenhaltige Kunststoffoberflächen eignen. Die Vinylgruppen reagieren dabei unter Einfluss energiereicher Strahlung in einer Aza-Michael-Addition mit den Aminogruppen auf der festen Werkstoffoberfläche. Die Aza-Michael-Addition einer primären Aminogruppe auf der Werkstoffoberfläche mit einer Acrylatgruppe im Funktionalisierungsreagenz ist nachfolgend schematisch dargestellt:

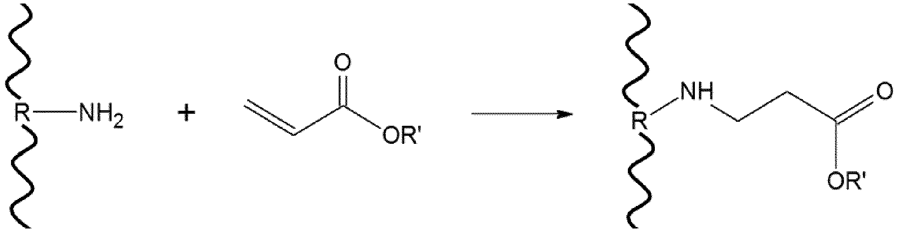

Die entsprechende Reaktion findet auch, bzw. - wie die Erfinder festgestellt haben - vor allen Dingen auch mit sekundären Aminen im aminogruppenhaltigen Kunststoff statt. Dies wurde in Versuchsreihen erkannt, wo kein Unterschied in der Funktionalisierung in Abhängigkeit von der Anzahl oder dem Vorhandensein von primären Aminogruppen im aminogruppenhaltigen Kunststoff gesehen wurde. Sekundäre Aminogruppen scheinen erfindungsgemäß auszureichen.

In praktischen Versuchen hat sich gezeigt, dass bei Funktionalisierungsreagenzien mit zwei Vinylgruppen nur eine von beiden mit Aminogruppen in der Werkstoffoberfläche reagiert. Die andere bleibt somit, wie gewünscht, als Funktionalisierung in der Werkstoffoberfläche vorhanden. Dies hat vermutlich mehrere Gründe. Zum einen handelt es sich um eine Festphasen- oder Fest/flüssig-Reaktion, wodurch es keine Durchmischung der Reaktionspartner gibt. Es scheint daher schon sterisch unwahrscheinlich, dass auch die zweite Vinylgruppe im Funktionalisierungsreagenz, die nach dem Aufpfropfen desselben von der Werkstoffoberfläche wegragt, eine weitere Aminogruppe in der Oberfläche zum Vollzug einer weiteren Aza-Michael-Addition "findet". Jedoch auch die Molekülgröße und Spacerlänge des Funktionalisierungsreagenzes scheinen eine Rolle zu spielen, wie weiter unten näher erläutert. Zumindest bei den aminogruppenhaltigen Kunststoffen, die lediglich endständige Aminogruppen aufweisen, wird auch die Dichte an Aminogruppen auf der Werkstoffoberfläche nicht ausreichen, damit beide Vinylgruppen eines Funktionalisierungsreagenzes damit abreagieren.

Die Aza-Michael Reaktion zwischen einer Vinylgruppe des Funktionalisierungsreagenzes und einer Aminogruppe in der Werkstoffoberfläche hat den Vorteil, dass das Funktionalisierungsreagenz lediglich auf die Werkstoffoberfläche aufgebracht und anschließend einer Bestrahlung mit energiereicher Strahlung (wie UV-Licht oder Elektronenstrahl) unterzogen werden muss. In der Werkstoffoberfläche können sich sowohl primäre als auch sekundäre Amine an die C=C-Doppelbindung der Vinylgruppe des Funktionalisierungsreagenzes in einer Aza-Michael-Addition anlagern.

Für die Aza-Michael-Addition ist es wichtig, dass die energiereiche Strahlung auch wirklich bis zu den sich zunächst bildenden Komplexen aus Vinyl- und Aminogruppe durchdringt. Nur so werden die für die Michael-Addition notwendigen Elektronen-Donor-Akzeptor- oder Charge-Transfer-Komplexe gebildet und durch Addition zum Alkylamin aufgelöst. Da die Aminogruppe direkt in der Werkstoffoberfläche sitzt, bilden sich auch die Komplexe nur unmittelbar an der Werkstoffoberfläche. Die Schicht an aufgetragenem Funktionalisierungsreagenz darf nicht zu dick sein, da ansonsten die energiereiche Strahlung nicht bis auf die Werkstoffoberfläche durchdringt. Besonders gute Ergebnisse wurden erzielt, wenn das Funktionalisierungsreagenz in einer Menge von höchstens 3 g/m², bevorzugt höchstens 2 g/m² und besonders bevorzugt höchstens 0,5 g/m² oder 1 g/m² aufgetragen wird.

Wird das Funktionalisierungsreagenz nicht in Reinform, sondern in Form einer Zusammensetzung aufgetragen, so darf diese keine Stoffe enthalten, welche die energiereiche Strahlung absorbieren. Insbesondere dürfen keine Photoinitiatoren oder Radikalstarter, wie ansonsten bei Lacken üblich, enthalten sein, da diese die energiereiche Strahlung nicht nur abfangen, sondern insbesondere auch zu einer radikalischen Polymerisation des vinylgruppenenthaltenden Funktionalisierungsreagenzes führen würden, was nicht gewünscht ist. Durch eine derartige Polymerisation und Filmbildung stünden die für die Funktionalisierung gedachten Vinylgruppen nicht mehr zur Verfügung und es würde auch verhindert, dass die energiereiche Strahlung bis auf die Werkstoffoberfläche durchdringen kann, um dort die gewünschte Aza-Michael-Reaktion zwischen Funktionalisierungsreagenz und Werkstoffoberfläche auszulösen.

Aus dem gleichen Grund ist es bislang im Stand der Technik auch nicht zu einer Funktionalisierung von beispielsweise Melaminharzoberflächen mit Vinylgruppen gekommen, wenn diese Oberflächen mit strahlenhärtenden Lacken beschichtet wurden. Zum einen wird die Strahlung durch die im Stand der Technik relativ dick aufgetragenen Primer-, Grundierungs- oder Lackschichten selbst, und insbesondere darin enthaltene strahlenabsorbierende Moleküle wie Photoinitiatoren, abgefangen und erreicht nicht die Werkstoffoberfläche. Somit kommt es an der Werkstoffoberfläche im Stand der Technik auch nicht zu strahlungsinduzierten Aza-Michael-Additionen. Jedoch selbst wenn dies der Fall wäre, reagieren bei der Strahlenhärtung alle in der Primer-, Grundierungs- oder Lackzusammensetzung enthaltenen Vinylgruppen binnen weniger Sekunden vollständig in der strahlungsinduzierten radikalischen Polymerisation ab. Somit kommt es nicht zu einer Funktionalisierung der Werkstoffoberfläche mit Vinylgruppen.

In einer bevorzugten Ausführungsform der Erfindung wird das Funktionalisierungsreagenz in einer Menge von weniger als 5 g/m², insbesondere weniger als 2 g/m² oder weniger als 1 g/m² auf die strukturierte Oberfläche des aminogruppenhaltigen Kunststoffs aufgetragen. Dies ist insbesondere besonders vorteilhaft, wenn das Funktionalisierungsreagenz und die Aminogruppen mittels energiereicher Strahlung zur Reaktion gebracht werden bzw. wenn die im Funktionalisierungsreagenz enthaltene weitere gegenüber den Aminogruppen des aminogruppenhaltigen Kunststoffs reaktive Gruppe eine Vinylgruppe ist. Denn gerade für strahleninduzierte Aza-Michael-Addition an der Werkstoffoberfläche ist es unabdingbar, dass die energiereiche Strahlung auch die Oberfläche erreicht.

Jedoch selbst wenn die Funktionalisierung nicht auf einer strahlungsinduzierten Aza-Michael-Addition beruht, haben sich diese Auftragsmengen als vorteilhaft und ausreichend erwiesen. Wie eingangs erläutert, haben die Erfinder erkannt, dass eine möglichst geringe Schichtdicke auf der strukturierten Werkstoffoberfläche notwendig ist, um deren Strukturierung bei einer nachfolgenden Lackierung zu erhalten. Vor diesem Hintergrund sollte auch die "Schicht" aus Funktionalisierungsreagenz so dünn wie möglich sein. Es ist in diesem Zusammenhang auch nicht zweckmäßig überhaupt von Schicht zu sprechen, da das Funktionalisierungsreagenz ja mit der Werkstoffoberfläche reagiert und im Anschluss nicht mehr als separate Schicht erkennbar ist.

Nach dem Auftragen des Funktionalisierungsreagenzes auf die strukturierte Oberfläche des aminogruppenhaltigen Kunststoffs wird diese vorzugsweise mit energiereicher Strahlung wie weiter oben beschrieben bestrahlt. Insbesondere bei der Funktionalisierung mittels Aza-Michael-Additionen stellt dies die bevorzugten Reaktionsbedingungen her, um eine kovalente Anknüpfung an die feste Werkstoffoberfläche zu gewährleisten. Die Art und Intensität der energiereichen Strahlung sollte so gewählt sein, dass die an der Werkstoffoberfläche gebildeten Komplexe zwischen Funktionalisierungsreagenz und Aminogruppen angeregt werden und in Aza-Michael-Reaktionen abreagieren.

Die Vinylgruppen im Funktionalisierungsreagenz bzw. in der funktionalisierten Werkstoffoberfläche können insbesondere ausgewählt sein aus der Gruppe bestehend aus Acrylaten, Methacrylaten, Vinylether, Allylether sowie vinylaromatische Verbindungen. Zu letzteren zählen z.B. Styrol, C₁₋₄-alkylsubstituiertes Styrol, Stilben, Vinylbenzyldimethylamin, (4- Vinylbenzyl)Dimethylaminoethylether, N,N-Dimethylaminoethylstyrol, tert-Butoxystyrol und Vinylpyridin. Besonders bevorzugt handelt es sich bei der gegenüber den Aminogruppen des aminogruppenhaltigen Kunststoffs reaktiven Gruppe im Funktionalisierungsreagenz um eine α,β-ungesättigte Carbonylverbindung, insbesondere um α,β-ungesättigte Carbonsäureester, oder α,β-ungesättigte Carbonsäureamide. Acrylsäure- und/oder Methacrylsäureester sind dabei besonders bevorzugt. α,β-ungesättigte Carbonylverbindungen oder Verbindungen, die α,β-ungesättigt in Bezug auf eine andere elektronenziehende Gruppe sind, eignen sich ganz besonders gut für Aza-Michael-Additionen. Vorzugsweise handelt es sich bei der Vinylgruppe um eine Vinylgruppe, die in direkter Verbindung zu einer elektronenziehenden Gruppe, beispielsweise einer Carbonylgruppe, steht.

Besonders gute Ergebnisse stellen sich ein, wenn das Funktionalisierungsreagenz ausgewählt ist aus der Gruppe bestehend aus Di-, Tri-, Tetra-, Penta- oder noch höherfunktionellen Acrylaten, Methacrylaten, Vinylethern und Allylethern. Das Funktionalisierungsreagenz kann dabei insbesondere ausgewählt sein aus der Gruppe bestehend aus Trimethylolpropantriacrylat, Dipropylenglycoldiacrylat, Tripropylenglycoldiacrylat, Hexandioldiacrylat, Pentaerythrittetraacrylat, Dipentaerythritpentaacrylat, Dipentaerythrithexaacrylat, Neopentylglycoldiacrylat, sowie propoxilierte oder ethoxilierte Varianten dieser Verbindungen, Polyalkylenglycoldiacrylate, insbesondere Polyethylenglycoldiacrylate, Divinylether, insbesondere Diethylenglykoldivinylether, Triethylenglykoldivinylether oder Cyclohexandimethanoldivinylether, und Diallylether. Die Molekulargewichte einiger dieser Verbindungen sind nachfolgend wiedergegeben:

**Tabelle 1**

| **Substanz** | **relative Molmasse (*M*ᵣ)** |
|---|---|
| Diallylether | 98,14 |
| Diethylenglykoldivinylether | 158,20 |
| Cyclohexandimethanoldivinylether | 196,29 |
| Triethylenglykoldivinylether | 202,25 |
| Neopentylglycoldiacrylat | 212,24 |
| Hexandioldiacrylat | 226,27 |
| Dipropylenglycoldiacrylat | 242,27 |
| Trimethylolpropantriacrylat | 296,32 |
| Tripropylenglycoldiacrylat | 300,35 |
| Pentaerythrittetraacrylat | 352,34 |
| Dipentaerythritpentaacrylat | 524,51 |
| Polyethylenglycoldiacrylat | z.B. mit einem mittleren Mᵣ von 532 |
| Dipentaerythrithexaacrylat | 578,60 |
| Polyalkylenglycoldiacrylate | z.B. mit einem mittleren Mᵣ von 360 bis 2000 |

Wenn hier von Molekulargewicht die Rede ist, dann ist damit das relative Molekulargewicht (Mᵣ) gemeint, d.h. die auf ein Zwölftel der Masse des Kohlenstoffisotops ¹²C normierte Molekülmasse. Das relative Molekulargewicht besitzt somit keine Maßeinheit.

Entsprechend den in obiger Tabelle angegebenen Molekulargewichten handelt es sich bei dem Funktionalisierungsreagenz vorzugsweise um ein kleines Molekül mit einem Molekulargewicht von 90 bis 2000, bevorzugt von 95 bis 1100 und insbesondere bevorzugt von 95 bis 600. Hierdurch wird gewährleistet, dass der Molekülteil zwischen den Vinylgruppen ("Spacer" 10, s. Fig. 3) möglichst klein ist. Durch die Verwendung von Funktionalisierungsreagenzien in diesem Molekülgrößenbereich wird sichergestellt, dass auch die auf die Aminogruppen der Werkstoffoberfläche aufgepfropften Strukturen ein Molekulargewicht im Bereich von 90 bis höchstens 2000, bevorzugt von 95 bis höchstens 1100 und insbesondere bevorzugt von 95 bis höchstens 600 aufweisen. Das führt in der funktionalisierten Werkstoffoberfläche dazu, dass die aufgepfropften Vinylgruppen möglichst nah an der Werkstoffoberfläche sitzen. Dies scheint eine bessere Verankerung und Adhäsion der später aufgetragenen Schicht aus strahlenhärtendem Lack zu bewirken.

Außerdem ist bei kürzeren Spacern auch die Wahrscheinlichkeit minimiert, dass das Funktionalisierungsreagenz nach der Aufpfropfung auf die aminogruppenhaltige Oberfläche zurückfaltet und auch die zweite Vinylgruppe mit Aminogruppen abreagiert. Dies liefe ansonsten der beabsichtigten Vinylfunktionalisierung der Oberfläche zuwider. Aus den gleichen Gründen soll es sich bei dem Funktionalisierungsreagenz erfindungsgemäß auch nicht um einen Lack oder ein Polymer handeln.

### Lackierter Werkstoff

Die vorstehend beschriebene Vinylfunktionalisierung der aminogruppenhaltigen Oberfläche führt zu einem lackierbaren Werkstoff, dessen strukturierte Oberfläche auch nach der Lackierung erhalten bleibt. Die Erfindung stellt demnach auch lackierte Werkstoffe bereit, die dadurch gekennzeichnet sind, dass sie eine strukturierte Lackoberfläche aufweisen. Diese lackierten Werkstoffe sind erhältlich durch ein Verfahren umfassend die Schritte
(a) Bereitstellung eines lackierbaren Werkstoffs wie zuvor beschrieben, d.h. eines Werkstoffs mit einer strukturierten Oberfläche aus einem aminogruppenhaltigen Kunststoff, bei dem zumindest ein Teil der Aminogruppen auf der strukturierten Oberfläche des aminogruppenhaltigen Kunststoffs durch Aufpfropfen eines Funktionalisierungsreagenzes kovalent mit Vinylgruppen funktionalisiert worden ist;
(b) Auftragen einer Schicht eines strahlenhärtenden Lacks auf die mit Vinylgruppen funktionalisierte, strukturierte Oberfläche des Werkstoffs,
(c) Strahlenhärtung der Lackschicht.

Soweit im Stand der Technik überhaupt Verfahren zur Erzielung makroskopisch strukturierter Lackoberflächen verfügbar sind, handelt es sich um nachträgliche Strukturierungen der Lackoberflächen. Derartige Verfahren haben sich jedoch wegen ungenügender Praxistauglichkeit nicht durchgesetzt. Es ist zum Beispiel vorgeschlagen worden, eine strukturgebende Folie auf die Lackschicht zu applizieren und diese Folie anschließend wieder abzuziehen. Zum einen ist es hierbei sehr schwierig, die Struktur genau passend zu einem im Untergrund vorhandenen Dekor aufzubringen. Zum anderen ist es auch schwierig, tiefere Strukturen einzubringen ohne die Lackschicht oder darunterliegende Schichten zu beschädigen. Um tiefergehende Strukturen zu erzeugen, wie dies zum Beispiel bei der Nachahmung einer Holzstruktur notwendig ist, müssen entsprechend dickere Lackschichten appliziert werden. Dies hat nicht nur Kostennachteile, sondern bedeutet in der Praxis auch meist mehrere aufeinanderfolgende Lackapplikationen, um die entsprechenden Schichtdicken zu erreichen.

Schließlich führt eine nachträgliche Oberflächenstrukturierung eines Lackes auch zu Defekten in der Lackoberfläche und deren Mikrostruktur. D.h. eine nachträglich strukturierte Lackoberfläche unterscheidet sich optisch, und zwar sowohl makroskopisch als auch mikroskopisch, stark von einer erfindungsgemäß strukturierten Lackoberfläche, die intakt ist. Bei der erfindungsgemäßen strukturierten Lackoberfläche geht die Oberflächenstruktur auf die im Untergrund bereits vorhandene Struktur zurück, die lediglich lackiert wird. Erfindungsgemäß ist die makroskopische Strukturierung direkt nach der Lackierung vorhanden und muss nicht nachträglich in den Lack eingebracht werden.

Wenn hier von "strukturierter" Oberfläche oder "Strukturierung" die Rede ist, dann ist damit eine makroskopische Strukturierung gemeint. Dies bedeutet eine in der Oberfläche vorhandene, mit dem bloßen Auge sichtbare Struktur, die über ein Höhen- und Tiefenprofil verfügt. Die Strukturierung ist dreidimensional ausgestaltet. Die strukturierte Oberfläche verfügt somit über eine Topographie, welche beim Darüberstreichen mit der bloßen Hand ertastbar ist und welche das Auge des Betrachters als Struktur wahrnimmt. "Struktur", "strukturierte Oberfläche", "Oberflächenstruktur", "Topographie" und "Höhen und Tiefenprofil" werden hier synonym verwendet.

Die Oberflächenstruktur der erfindungsgemäßen strukturierten Werkstoff- bzw. Lackoberfläche ist insbesondere eine ursprünglich durch Prägung, Kaschierung, Kalandrierung, Ätzung, Lasern oder Bedruckung erzeugte dekorative Struktur. Bei der Oberflächenstruktur der strukturierten Werkstoff- bzw. Lackoberfläche handelt sich vorzugsweise um eine mit dem bloßen Auge sichtbare dekorative Struktur. In einer bevorzugten Ausführungsform stellt die Oberflächenstruktur der strukturierten Werkstoff- bzw. Lackoberfläche die Oberflächenstruktur von Holz, Naturstein, Kunststein, Keramik, Metall, Mosaiken, Dielen, Fliesen, Fugen oder eine andere mit dem bloßen Auge sichtbare dekorative Struktur dar.

Gemäß einer besonders bevorzugten Ausführungsform weist der lackierbare bzw. der lackierte Werkstoff ein Dekor auf, insbesondere ein Dekor, auf welches die Strukturierung der Werkstoff- bzw. Lackoberfläche abgestimmt sind. Ist das Dekor beispielsweise ein Holzdekor, so kann die Strukturierung in der dreidimensionalen Nachahmung der Holzschnitttopographie bestehen, d.h. Rillen entlang der abgebildeten Wachstumslinien und Vertiefungen an abgebildeten Astlöchern etc. Ist das Dekor ein gefliester Boden oder ein Mosaik, so kann die Strukturierung dieses Dekor durch Vertiefungen entsprechend der abgebildeten Fugen unterstützen.

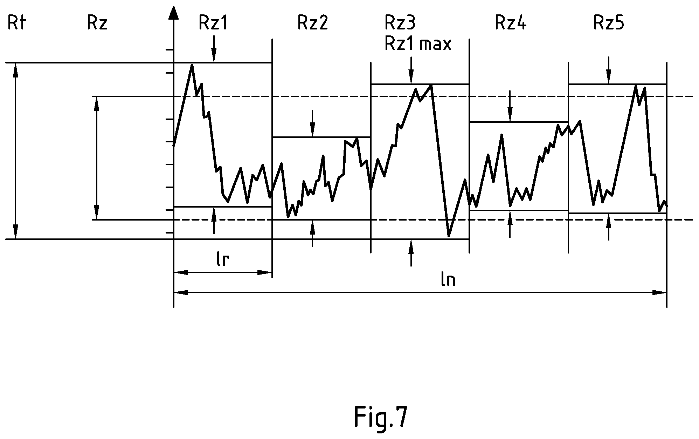

Um mit dem bloßen Auge als makroskopische Struktur wahrgenommen werden zu können, ist es notwendig, dass die Vertiefungen und Erhebungen in der Oberflächenstruktur bzw. Topographie entsprechend stark ausgeprägt sind. Die Oberflächenbeschaffenheit von Werkstoffen werden mittels DIN EN ISO 4287 über das sogenannte Tastschnittverfahren quantifiziert. Die hier nach DIN EN ISO 4287 gemessenen Kennwerte Rz, Rz Max und Rt werden wie in Fig. 7 gezeigt bestimmt und sind wie folgt definiert. Rz: gemittelte Differenz aus höchstem und niedrigstem Profil; Rz Max: höchste gemessene Stelle; Rt: Gesamthöhe des Profils (Abstand zwischen dem höchsten Peak und dem tiefsten Tal des Profils über die gesamte evaluierte Länge ln).

Gemäß einer bevorzugten Ausführungsform hat die strukturierte Werkstoffoberfläche bzw. die strukturierte Lackoberfläche einen Rz-Wert, gemessen nach DIN EN ISO 4287, von mindestens 10 µm, besonders bevorzugt mindestens 15 µm und insbesondere bevorzugt mindestens 20 µm. Dies gewährleistet, dass die Struktur gut ertastbar und sichtbar ist und unterscheidet die erfindungsgemäße Oberflächenstruktur auch von der Mikrostruktur der Oberfläche, die zwar optische Effekte haben mag, aber mit dem bloßen Auge nicht als Struktur wahrnehmbar ist. Der Rz-Wert, gemessen nach DIN EN ISO 4287, beträgt vorzugsweise höchstens 120 µm, besonders bevorzugt höchstens 100 µm und insbesondere bevorzugt höchstens 80 µm.

Gemäß einer Ausführungsform beträgt die Gesamtschichtdicke (gemessen nach der Strahlenhärtung) an strahlenhärtendem Lack im lackierten Werkstoff höchstens die Hälfte und vorzugsweise höchstens ein Drittel des Rz-Werts der unlackierten Werkstoffoberfläche. Vorzugsweise enthält der lackierte Werkstoff keine Primer- oder Grundierungsschichten. So wird gewährleistet, dass die im Untergrund vorhandene Strukturierung auch als strukturierte Lackoberfläche im lackierten Werkstoff erhalten bleibt.

Der Fachmann unterscheidet bei Oberflächen makroskopische von mikroskopischen Strukturen (sogenannte Mikrostruktur). Makroskopische Strukturen sind mit dem bloßen Auge als Struktur wahrnehmbar. Diese sind gemeint, wenn in dieser Beschreibung von "Struktur" oder "Strukturierung" die Rede ist. Im Gegensatz hierzu sind Mikrostrukturen, wie der Name schon sagt, nur mit dem Mikroskop sichtbar. Besonders vorteilhafte Mikrostrukturen können beispielsweise mittels Excimer-Härtung in einer Lackoberfläche erzeugt werden. Die Erfindung erlaubt es, beispielsweise makroskopisch strukturierte Aminoplastharzoberflächen mit einer Excimer-gehärteten Lackschicht zu kombinieren.

Die Excimer-Härtung ist dem Fachmann bekannt und wird in der Praxis in großem Stil zur Mattierung von Lackoberflächen eingesetzt. Die Mattierung erfolgt dabei rein physikalisch und kommt ohne den Zusatz von sonst notwendigen Mattierungsmitteln aus. Die Excimer-Härtung beruht auf folgendem Prinzip: In strahlenhärtenden Lacken (z.B. Acrylaten) werden durch die 172-nm-Ecximerlampe (z.B. Excirad 172) freie Radikale gebildet, die eine Polymerisation und Vernetzung auslösen. Die Eindringtiefe der 172-nm-Photonen in die Acrylate liegt zwischen 0,1 und 0,5 nm, so dass nur eine ganz dünne Oberflächenschicht vernetzt wird. Der durch die Polymerisation bedingte Schrumpf führt zu Mikrostrukturen. Eine faltige Haut schwimmt auf dem flüssigen Film, der mit einer zweiten Strahlenquelle anschließend komplett durchgehärtet wird. Dazu kann eine Hg-UV-Lampe, ein Elektronenstrahler oder eine langwellige Excimerlampe mit 308 nm verwendet werden. Zur Vermeidung der Ozonbildung läuft die Bestrahlung in einer Stickstoff-Atmosphäre ab.

Die mit der 172-nm-Ecximerlampe erzeugte physikalische Mikrofaltung erlaubt es ohne Zusatz von Mattierungsmitteln in strahlenhärtenden Lacken Glanzwerte von 1 bis 10, gemessen z.B. nach EN ISO 2813 mit der 60°-Geometrie, problemlos zu erreichen. Die energiereiche und kurzwellige 172-nm-Strahlung führt neben der radikalischen Polymerisation der Acrylatgruppen zu zusätzlichen Quervernetzungen der Monomere. Dadurch erhöht sich die Oberflächenhärte beträchtlich. Die Erfinder haben auch festgestellt, dass die Excimer-Härtung bei Lackoberflächen zu einem vorteilhaften Anti-Fingerprint-Effekt führt.

Die erfindungsgemäß vorgesehene strukturierte Lackoberfläche kann in besonders vorteilhafter Weise mit einer Mikrostruktur, insbesondere einer durch Excimer-Härtung erzeugten Mikrostruktur in der Lackoberfläche kombiniert werden.

Gemäß einer bevorzugten Ausführungsform ist der lackierte Werkstoff dadurch gekennzeichnet, dass die Lackschicht eine Excimer-gehärtete Lackschicht ist.

Durch Verwendung einer solchen Excimer-Härtung oder Auswahl eines entsprechend matten Lackes ist es erfindungsgemäß möglich, strukturierte Lackoberflächen zu erhalten, die einen Glanzwert von unter 10, vorzugsweise unter 5, jeweils gemessen nach ÖNORM EN ISO 2813 (Version 2015-01-01) mit der 60°-Geometrie, aufweisen.

Die gängigen aminogruppenhaltigen Kunststoffe, insbesondere Aminoplastharze, sind einer Excimer-Härtung nicht zugänglich. In ihre Oberflächen lassen sich bei der Herstellung jedoch besonders gut, z.B. durch entsprechend strukturierte Walzen oder Pressbleche, dekorative Strukturen einprägen. Durch die Erfindung ist es möglich, die makroskopischen, z.B. durch Prägung erzeugten Oberflächenstrukturen mit einer Excimer-Härtung im Zuge der Lackierung zu kombinieren. Dies führt zu strukturierten Werkstoffoberflächen, die eine außergewöhnlich natürliche Mattheit aufweisen, und bei Kombination entsprechender Dekore und Strukturierungen (z.B. Fußbodenlaminat als Holzbodenimitat) nicht mehr von dem nachzuahmenden Material (z.B. Echtholzparkett) zu unterscheiden sind. Durch eine entsprechende Mikrostrukturierung der Lackoberfläche oder der Verwendung eines entsprechenden Lackes erlaubt die Erfindung auch erstmals makroskopische, z.B. durch Prägung erzeugte Oberflächenstrukturen mit Anti-Fingerprint-Eigenschaften auszustatten.

Ermöglicht wird dies, indem erfindungsgemäß durch die Vinylfunktionalisierung der Werkstoffoberfläche auf den ansonsten bei der Lackierung von aminogruppenhaltigen Kunststoffen, insbesondere Aminoplastharzen, mit strahlenhärtenden Lacken notwendigen Primeranstrich bzw. die Grundierung oder den Spachtel verzichtet werden kann. Diese führen im Stand der Technik zu Schichtdicken im Lackaufbau von regelmäßig über 20 oder 30 g/m². Eine im Untergrund vorhandene Strukturierung der Oberfläche, wie sie beispielsweise bei der Nachahmung von Holzstrukturen und -dekoren üblich ist, wird bei einem derart dicken Lackauftrag zwangsläufig ausgeglichen und damit zunichte gemacht. Aus diesem Grund wurde im Stand der Technik beispielsweise bislang von einer Lackierung strukturierter Aminoplastharzoberflächen, wie sie bei der Laminat- oder Möbelplattenherstellung üblich sind, abgesehen.

Der erfindungsgemäße lackierte Werkstoff zeichnet sich dadurch aus, dass die aufgetragene Schicht aus strahlenhärtendem Lack oder Lacken so dünn ist, dass eine im Untergrund vorhandene Strukturierung im Wesentlichen erhalten bleibt. Dies wird erfindungsgemäß dadurch ermöglicht, dass wegen der Vinylfunktionalisierung auf entsprechende Primer- oder Grundierungsschichten verzichtet werden kann. So enthält der lackierte Werkstoff typischerweise keine Lack-Primer- oder Grundierungsschicht. Es kann sich daher bei dem strahlenhärtenden Lack, der auf die vinylfunktionalisierte Oberfläche aufgetragen wird, auch direkt um einen Decklack handeln. Dieser würde ansonsten auf den gängigen aminogruppenhaltigen Kunststoffen, insbesondere Aminoplastharzen, nur bei Vorlackierung mit entsprechend ausgestalteten Lack-Primern oder Grundierungen haften.

Gemäß einer besonders vorteilhaften Ausführungsform beträgt die Menge an insgesamt auf die Kunststoffoberfläche des lackierbaren Werkstoffs aufgetragenem strahlenhärtenden Lack weniger als 20 g/m², insbesondere weniger als 15 g/m² oder weniger als 10 g/m². Im erfindungsgemäßen lackierten Werkstoff beträgt die mittlere Schichtdicke der sich auf der strukturierten Kunststoffoberfläche befindenden Lackschicht aus strahlenhärtendem Lack vorzugsweise von 0 bis 50 µm, besonders bevorzugt von 5 bis 35 µm, und am bevorzugtesten von 5 bis 15 µm. Die Schichtdicke wird mikroskopisch anhand von Querschnitten nach DIN EN ISO 1463 (August 2004) gemessen. Die erfindungsgemäß ermöglichten geringen Lackauftragsmengen bzw. - schichtdicken führen dazu, dass die im Untergrund (dem lackierbaren Werkstoff) vorhandene Oberflächenstrukturierung auch im lackierten Werkstoff in Form einer strukturierten Lackoberfläche erhalten bleibt.

### Strahlenhärtender Lack

Durch die in die Oberfläche des lackierbaren Werkstoffs eingefügten Vinylgruppen ist dieser optimal für eine anschließende Lackierung mit einem strahlenhärtenden Lack vorbereitet. Denn die meisten strahlenhärtenden Lacke härten selbst über Vinylgruppen-vermittelte radikalische Polymerisation aus. Somit stellen die Vinylgruppen in der Werkstoffoberfläche kovalente Verankerungspunkte für den strahlenhärtenden Lack dar, was zu einer hervorragenden Haftung des Lacks auf der Werkstoffoberfläche führt.

Der strahlenhärtende Lack kann durch alle dem Fachmann bekannten Verfahren zur Aufbringung von Lacken auf die mit Vinylgruppen funktionalisierte, strukturierte Oberfläche des lackierbaren Werkstoffs aufgebracht werden. Das Auftragen kann insbesondere durch Walzen, Sprühen, Spritzen, Fluten, Tauchen, Gießen, Rakeln und/oder Aufstreichen erfolgen.

Durch die Auswahl des strahlenhärtenden Lackes können der gewünschte Glanzgrad sowie die Oberflächeneigenschaften flexibel und gezielt eingestellt werden. Auch partielle Matt/Glanz-Effekte oder auf das Dekorbild abgestimmte Matt/Glanz-Abstufungen können durch die Auswahl eines geeigneten strahlenhärtenden Lackes erreicht werden. Vorzugsweise hat der strahlenhärtende Lack einen Glanzwert von unter 10, vorzugsweise unter 5, jeweils gemessen nach ÖNORM EN ISO 2813 (Version 2015-01-01) mit der 60°-Geometrie, nach der Aushärtung.

Strahlenhärtende Lacke sind dem Fachmann bekannt und beispielsweise hier beschrieben: Prieto und Keine, "Holzbeschichtung", FARBE UND LACK, 2019, Kapitel 3.1.6 - Strahlenhärtende Lacksysteme. Ein "strahlenhärtender Lack", wie hier verwendet, ist ein Lack, der Filmbildner mit Kohlenstoff-Kohlenstoff-Doppelbindungen enthält, die unter Einwirkung von ultraviolettem Licht (UV) oder ionisierender Strahlung (ESH) radikalisch polymerisieren. Vorzugsweise handelt es sich bei den Kohlenstoff-Kohlenstoff-Doppelbindungen um acrylische Doppelbindungen, d.h. solche, die auf Acryl- oder Methacrylsäure oder Derivate dieser Verbindungen zurückgehen. Bei der UV-Härtung müssen Photoinitiatoren zugegeben werden, um die für die Polymerisation notwendigen Startradikale zu erzeugen. Der strahlenhärtende Lack enthält neben dem Filmbildner üblicherweise Reaktivverdünner und Photoinitiator sowie ggf. weitere Additive ausgewählt aus der Gruppe bestehend aus Pigmenten, Füllstoffen, Mattierungsmittel, Entschäumer, Silikonölen, sowie Inhibitoren oder Stabilisatoren.

Gemäß einer Ausführungsform handelt es sich bei dem strahlenhärtenden Lack um ein strahlenhärtendes Acrylatharz. Diese werden aufgrund ihres Eigenschaftsprofils, insbesondere der gleichzeitigen Erfüllung mechanischer (z.B. Härte, Abriebfestigkeit, Kratzfestigkeit und/oder Abnutzungsbeständigkeit) und optischer Anforderungen, üblicherweise in Lackzusammensetzungen verwendet, die der Oberflächenveredelung dienen. Bevorzugt wird als strahlenhärtendes Acrylatharz Dipropylen-glycol-diacrylat (DPGDA) und/oder Poly(propylenglycoldiacrylat) (PPGDA) eingesetzt. Weitere erfindungsgemäß einsetzbare strahlenhärtbare Acrylatharze werden beispielsweise von der BASF unter der Marke "Laromer^{®}" vertrieben. Wenn hier von "Acrylat" die Rede ist, dann ist davon auch immer das entsprechende Methacrylat-Derivat umfasst.

Unter Reaktivverdünner versteht der Fachmann polymerisierbare, strahlenhärtende Monomere, die dem strahlenhärtenden Lack zur Viskositätserniedrigung zugegeben werden. Im Gegensatz zu einem klassischen Lösungsmittel reagieren die Reaktivverdünner bei der Strahlenhärtung in der radikalischen Polymerisation mit und werden so als Monomere in den Lackfilm eingebaut. Besonders gute Ergebnisse lassen sich mit monomeren (Meth)Acrylsäureestern als Reaktivverdünner erzielen, die bei Raumtemperatur flüssig sind. Beispiele für solche Verbindungen sind Isobornylacrylat, Hydroxypropylmethacrylat, Trimethylolpropanformalmonoacrylat, Tetrahydrofurfurylacrylat, Phenoxyethylacrylat, Trimethylolpropantriacrylat, Dipropylenglycoldiacrylat, Tripropylenglycoldiacrylat, Hexandioldiacrylat, Pentaerythrittetraacrylat, Dipentaerythritpentaacrylat, Laurylacrylat sowie propoxilierte oder ethoxilierte Varianten dieser Reaktivverdünner. In Frage kommen auch urethanisierte Reaktivverdünner wie EBECRYL 1039 (Cytec) oder andere bei Raumtemperatur flüssige Verbindungen, die in der Lage sind, unter Bedingungen der radikalischen Polymerisation mit zu reagieren z. B. Vinylether oder Allylether. Bevorzugt werden als Vinylether Diethylenglycoldivinylether, Triethylenglycoldivinylether oder Cyclohexandimethanoldivinylether. Der strahlenhärtbare Lack kann Reaktivverdünner in einer Menge von 1-70 Gew.-% enthalten

Vorzugsweise ist der Filmbildner im strahlenhärtbaren Lack ausgewählt aus ungesättigten Polyestern, Epoxy-Acrylaten, Polyester-Acrylaten, Polyether-Acrylaten, Amino-modifizierten Polyether-Acrylaten und Urethan-Acrylaten. Als ungesättigte Polyester (UP) kommen insbesondere solche auf Basis von Maleinsäure in Frage. Diese werden in der Praxis häufig mit Styrol als Reaktivverdünner kombiniert.

Um UV-gehärtet werden zu können, müssen strahlenhärtbare Lacke zwingend Photoinitiatoren enthalten. Für die homolytische Spaltung der C=C-Doppelbindung wäre eine Wellenlänge von 200 nm nötig. Die handelsüblichen UV-Strahler emittieren nur in sehr geringem Maße in diesem Wellenlängenbereich. Außerdem wird dieser Strahlungsbereich von Luft absorbiert, wodurch Ozon entsteht. Photoinitiatoren sind Radikalbildner, die in der Lage sind, den emissionsreicheren längerwelligen Bereich des UV-Strahlers zu absorbieren. Die dadurch gebildeten Radikale lösen dann die radikalische Polymerisation der reaktivien Komponenten des UV-Lacks (Filmbildner und ggf. Reaktivverdünner) aus. Photoinitiatoren können beispielsweise ausgewählt sein aus der Gruppe bestehend aus alpha-Hydroxyketonen, 1-Hydroxycyclohexylphenyl-keton, Benzophenon, Thioxanthonen, Benzoin, Benzoinether, Benzilketalen, Aminoalkylphenonen, Hydroxyalkylphenonen, Monoacylphosphinoxiden und Bisacylphosphinoxiden und deren Derivaten. Falls der strahlenhärtbare Lack Pigmente oder andere absorbierende Substanzen enthält, müssen diese und der verwendete Photoinitiator in Bezug auf die absorbierten Wellenlängenbereiche ausgewählt und aufeinander abgestimmt werden.

Nachfolgend wird die Erfindung beispielhaft anhand von Ausführungsbeispielen unter Bezugnahme auf die beigefügten Zeichnungen näher beschrieben. Die Beispiele dienen lediglich der Illustration der Erfindung und schränken den Schutzumfang nicht ein.

In den Zeichnungen zeigt
- Fig. 1:: einen erfindungsgemäß lackierbaren oder lackierten Werkstoff, der plattenförmig ist und dessen Oberfläche eine Strukturierung aufweist, welche eine Holzmaserung nachbildet,
- Fig. 2:: Querschnitte durch verschiedene erfindungsgemäß lackierbare plattenförmige Werkstoffe, die den Aufbau dieser Werkstoffe und ihrer oberflächlichen Schichten verdeutlichen sollen, dabei zeigt Fig. 2a ein Laminat, Fig. 2b einen Schichtstoff und Fig. 2c einen Holzwerkstoff,
- Fig. 3:: eine schematische Detailbetrachtung der Werkstoffoberfläche aus einem aminogruppenhaltigen Kunststoff, wobei gezeigt wird, wie eine dort vorhandene Aminogruppe mit dem erfindungsgemäßen Funktionalisierungsreagenz reagieren kann, um zu einer Vinylfunktionalisierung der Werkstoffoberfläche zu führen,
- Fig. 4:: Querschnitte durch verschiedene erfindungsgemäß lackierte plattenförmige Werkstoffe, wobei es sich um die Werkstoffe aus Fig. 2 handelt, deren Oberfläche erfindungsgemäß funktionalisiert und anschließend mit einem strahlenhärtenden Lack lackiert wurde,
- Fig. 5:: Schematische Darstellungen der strukturierten Werkstoffoberfläche vor und nach einer Lackierung und ggf. Funktionalisierung, dabei zeigt Fig. 5a eine strukturierte Werkstoffoberfläche vor jeglicher Funktionalisierung oder Lackierung, Fig. 5b eine gemäß dem Stand der Technik geprimerte bzw. grundierte und anschließend lackierte Oberfläche, Fig. 5c eine erfindungsgemäß mit Vinylgruppen funktionalisierte lackierbare Werkstoffoberfläche und Fig. 5d eine wie in Fig. 5c gezeigte funktionalisierte Oberfläche nach der Lackierung,
- Fig. 6:: eine schematische Darstellung des Herstellungsverfahrens für den erfindungsgemäß lackierbaren bzw. lackierten Werkstoff.
- Fig. 7:: ein beispielhaftes Tastschnittprofil zur Erläuterung der hier verwendeten Rauheitsparameter R_{z} und Rt.

**Bezugszeichenliste**

| | |
|---|---|
| **1** | Werkstoff |
| **1'** | Lackierbarer Werkstoff |
| **1"** | Lackierter Werkstoff |
| **2** | Oberfläche aus einem aminogruppenhaltigen Kunststoff |
| **3** | Strukturierung |
| **4** | Oberste Schicht |
| **5** | Trägerplatte |
| **6** | Gegenzug |
| **7** | Kern |
| **8** | Funktionalisierungsreagenz |
| **9** | Vinylgruppe |
| **10** | Spacer |
| **11** | Kovalente Bindung |
| **12** | Schicht aus strahlenhärtendem Lack |
| **13** | Grundierungs- oder Primerschicht |
| **14** | Erstes Zuführförderband |
| **15** | Zweites Zuführförderband |
| **16** | Drittes Zuführförderband |
| **17** | Bandförderanlage |
| **18** | Melaminharz imprägniertes Dekorpapier |
| **19** | Melaminharz imprägniertes Overlaypapier |
| **20** | Pressstapel |
| **21** | Kurztaktpresse |
| **22** | Strukturiertes Pressblech |
| **23** | Einrichtung zum Auftragen des Funktionalisierungsreagenzes |
| **24** | Erste Strahlungsquelle |
| **25** | Energiereiche Strahlung |
| **26** | Einrichtung zum Auftragen des strahlenhärtenden Lacks |
| **27** | Excimer-Strahlungsquelle |
| **28** | Excimer-Strahlung |
| **29** | Zweite Strahlungsquelle |
| **30** | Beschickförderband |

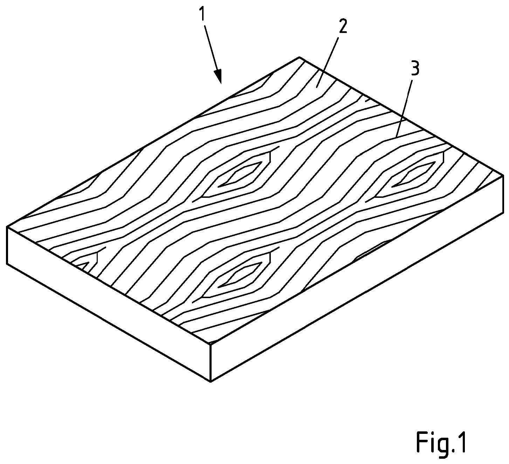

Fig. 1 zeigt eine Draufsicht auf einen erfindungsgemäß lackierbaren oder lackierten Werkstoff 1. In beiden Fällen ist die charakteristische Strukturierung 3 der Oberfläche zu erkennen (strukturierte Oberfläche aus aminogruppenhaltigen Kunststoff oder strukturierte Lackoberfläche), welche in der gezeigten Ausführungsform eine Holzmaserung nachbildet. Der Werkstoff 1 ist plattenförmig und kann ein Dekor aufweisen (z.B. ein Holzdekor), welches zu der Strukturierung 3 in Einklang steht. Der Werkstoff 1 weist eine Oberfläche aus einem aminogruppenhaltigen Kunststoff 2 auf, in welche die Strukturierung 3 eingebracht ist.

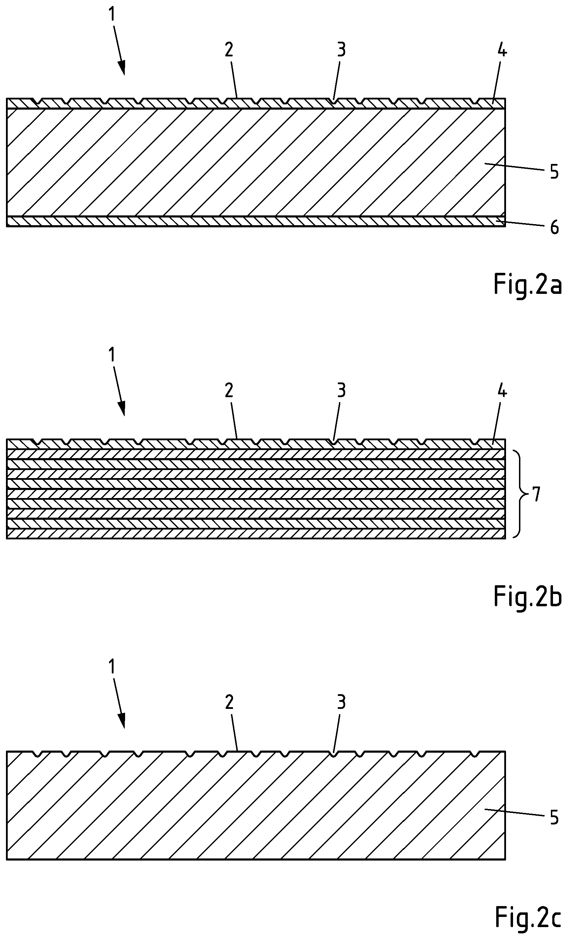

Fig. 2 zeigt Querschnitte durch drei beispielhafte Werkstoffe 1, die erfindungsgemäß eingesetzt werden können und in der Draufsicht aussehen können wie in Fig. 1 gezeigt. Der in Fig. 2a gezeigte Werkstoff 1 ist ein Laminat aus einer Trägerplatte 5, einem darunter liegenden Gegenzug 6 und einer darüber liegenden obersten Schicht 4. Bei dem Gegenzug 6 handelt es sich typischerweise um ein in Kunstharz getränktes Papier, welches dazu dient, die Spannungen auf Ober- und Unterseite auszugleichen. Die Trägerplatte 5 kann eine Holzwerkstoffplatte, wie z.B. eine MDF- oder HDF-Platte sein. Es kann sich aber auch um eine Kunststoff- oder Kompaktplatte aus mit Phenolharz imprägnierten Kraftpapieren handeln. Die oberste Schicht 4 besteht typischerweise aus zumindest einem melaminharzimprägnierten Dekorpapier und einem darüber liegenden melaminharzimprägnierten Overlay, welche zusammen mit der Trägerplatte 5 und dem Gegenzug 6 zu dem Werkstoff 1 heiß verpresst wurden. Hierdurch verbinden sich die Lagen des Laminats miteinander und das Melamin- bzw. Kunstharz härtet aus. An der Oberseite der obersten Schicht 4 des Werkstoffs 1 befindet sich wegen des dort vorhandenen ausgehärteten Melaminharzes eine Oberfläche aus einem aminogruppenhaltigen Kunststoff 2. Bei den Aminogruppen handelt es sich um endständig verbliebene primäre Aminogruppen und die sekundären Aminogruppen des ausgehärteten Melaminharzes (Melamin-Formaldehydharz).

Im Querschnitt ebenfalls zu erkennen ist die in Fig. 1 in Draufsicht bereits gezeigte Strukturierung 3 der Oberfläche, die hier schematisch als Vertiefungen dargestellt sind, wie sie beispielsweise bei der Herstellung mit strukturierten Pressblechen erzeugt werden können. Es sind selbstverständlich jedoch auch auftragende Strukturierungsmaßnahmen möglich (z.B. 3D-Druck), die dann zu Erhebungen in der Oberfläche führen würden oder eine Kombination aus Erhebungen und Vertiefungen. Die gezeigte Oberfläche aus aminogruppenhaltigen Kunststoff 2 kann bereits erfindungsgemäß mit Vinylgruppen funktionalisiert worden sein, in welchem Fall es sich bei dem Werkstoff 1 um einen erfindungsgemäß lackierbaren Werkstoff 1' handelt. Andernfalls handelt es sich bei dem gezeigten Werkstoff 1 um das Ausgangsmaterial für das erfindungsgemäße Verfahren zur Herstellung des lackierbaren Werkstoffs 1'.

Der in Fig. 2b gezeigte Werkstoff 1 stellt einen Schichtstoff, z.B. eine Kompaktplatte, dar. Den Kern 7 bildet ein Stapel aus mit Phenolharz imprägnierten Kraftpapieren (z.B. 90 Lagen), bei der obersten Schicht 4 kann es sich wieder wie bei Fig. 2a um ein melaminharzimprägniertes Dekorpapier und ein darüber liegendes melaminharzimprägniertes Overlay handeln, welche zusammen mit dem Kern 7 an imprägnierten Papieren zu dem Werkstoff 1 heiß verpresst wurden. Zu den übrigen Merkmalen gilt das zu Fig. 2a bereits Gesagte entsprechend.

Wie in Fig. 2c gezeigt, kann es sich bei dem Werkstoff 1 auch nur um eine mit einer Strukturierung 3 versehene Trägerplatte 5 handeln. Diese weist eine Oberfläche aus einem aminogruppenhaltigen Kunststoff 2 auf. Die Trägerplatte 5 kann beispielsweise aus dem aminogruppenhaltigen Kunststoff bestehen oder mit diesem beschichtet sein. Es kann sich bei der Trägerplatte 5 auch um eine Holzwerkstoffplatte handeln (z.B. Span-, Faser- oder OSB-Platte), die aus lignocellulosehaltigen Partikeln erhalten wurde, die mit einem aminoplastischen Bindemittel beleimt und zur Holzwerkstoffplatte verpresst wurden. Bei den Aminogruppen an der Oberfläche 2 handelt es sich dann um endständig verbliebene primäre Aminogruppen und die sekundären Aminogruppen des ausgehärteten Aminoplastharzes. Die Trägerplatte weist zumindest an der oberseitigen Oberfläche 2 eine Strukturierung 3 auf. Es gilt das zu Fig. 2a Gesagte entsprechend.

Fig. 3 zeigt schematisch eine Detailansicht der Reaktionen, die an der in den Fig. 1 und 2 gezeigten Oberfläche aus einem aminogruppenhaltigen Kunststoff 2 bei der erfindungsgemäßen Funktionalisierung mit dem Funktionalisierungsreagenz 8 ablaufen. In Fig. 3a und Fig. 3c ist in der Oberfläche aus einem aminogruppenhaltigen Kunststoff 2 repräsentativ jeweils eine einzelne sekundäre Aminogruppe (-NHR) gezeigt. Es versteht sich von selbst, dass die Oberfläche aus einem aminogruppenhaltigen Kunststoff 2 viele derartige sekundäre, aber auch primäre Aminogruppen (-NH₂) enthalten wird, die jeweils ebenfalls entsprechend mit dem Funktionalisierungsreagenz 8 reagieren können. Das Funktionalisierungsreagenz 8 weist mindestens drei Molekülteile auf: (1) eine erste funktionelle Gruppe A, welche eine Vinylgruppe 9 aufweist, (2) eine zweite funktionelle Gruppe B, hierbei handelt es sich um eine gegenüber den Aminogruppen des aminogruppenhaltigen Kunststoffs reaktive Gruppe, und (3) den dazwischenliegenden Molekülteil, der hier als "Spacer" 10 bezeichnet wird. Falls es sich um komplexere Moleküle handelt, bezeichnet die Spacerlänge den kürzesten Weg zwischen den Gruppen A und B. Vorzugsweise beträgt die Spacerlänge zwischen 2 und 20 Kohlenstoffatome, insbesondere zwischen 2 und 10 Kohlenstoffatome, wobei noch andere Heteroatome zwischen den Kohlenstoffatomen vorhanden sein können. Das Funktionalisierungsreagenz 8 ist damit ein mindestens bifunktionelles Molekül, da es über mindestens die funktionellen Gruppen A und B verfügt.

In Fig. 3a und 3b ist das Funktionalisierungsreagenz 8 lediglich schematisch dargestellt. Bei der in Fig. 3a gezeigten funktionellen Gruppe A kann es sich um jede funktionelle Gruppe handeln, die eine Vinylgruppe 9 umfasst. Gruppe A kann auch aus einer Vinylgruppe bestehen. Bei der in Fig. 3a gezeigten funktionellen Gruppe B kann es sich um jede gegenüber den Aminogruppen des aminogruppenhaltigen Kunststoffs reaktive Gruppe handeln. Bei Gruppe B kann es sich beispielsweise um ein Epoxid, Säureanhydrid, Säurechlorid, Säureazid, Sulfonylchlorid, Keton, Aldehyd, Carbonsäure, Ester, insbesondere N-Hydroxysuccinimid-Ester, Imidoester, oder Carbonate, Carbodiimid, Isocyanat, Isothiocyanat, Alkylhalogenid, Arylhalogenid, Alkin oder um eine Vinylgruppe, wie z.B. Acrylat, Methacrylat oder Acrylamid, handeln. In Fig. 3c und 3d ist mit Hexandioldiacrylat (HDDA) ein konkretes Funktionalisierungsreagenz 8 beispielhaft gezeigt. In diesem symmetrisch aufgebauten Molekül handelt es sich sowohl bei Gruppe A als auch bei Gruppe B um eine Acrylatgruppe. Der Spacer 10 besteht hier aus sechs -CH₂- Gruppen.

Das Funktionalisierungsreagenz 8 wird erfindungsgemäß auf die Oberfläche aus einem aminogruppenhaltigen Kunststoff 2 aufgetragen, so dass es zu der in Fig. 3a und 3c schematisch gezeigten Anordnung kommt. Durch Einstellen der geeigneten Reaktionsbedingungen kommt es an der Oberfläche 2 zur Reaktion zwischen dort vorhandenen Aminogruppen und der reaktiven Gruppe B des Funktionalisierungsreagenz 8 und damit zum Aufpfropfen des Funktionalisierungsreagenzes auf eine Aminogruppe an der Oberfläche des aminogruppenhaltigen Kunststoffs unter Ausbildung einer kovalenten Bindung 11 wie in Figur 3b und 3d gezeigt. Die Oberfläche 2 wurde dadurch kovalent mit Vinylgruppen 9 funktionalisiert, die dort jetzt zur Reaktion mit z.B. einem strahlenhärtenden Lack zur Verfügung stehen. Fig. 3b und 3d) zeigen somit eine Detailansicht der funktionalisierten Oberfläche eines erfindungsgemäß lackierbaren Werkstoffs 1'.

Die Reaktionsbedingungen, welche zwischen den Fig. 3a und 3b bzw. 3c und 3d durch einen Reaktionspfeil symbolisch dargestellt sind, hängen stark von der Natur und Chemie der reaktiven Gruppe B im Funktionalisierungsreagenz ab. Handelt es sich bei der reaktiven Gruppe B um eine Vinyl- und insbesondere um eine Acrylatgruppe, reicht die Bestrahlung mit energiereicher Strahlung wie Elektronenstrahlen oder UV-Licht aus, damit es zu der in Fig. 3c und 3d gezeigten Aza-Michael-Addition kommt.

Die mit Vinylgruppen funktionalisierten Werkstoffoberflächen können im Anschluss lackiert oder gelagert werden. Wenn für die Funktionalisierung eine nicht reversible Reaktion gewählt wird (z.B. Aza-Michael Addition), haben sich die mit Vinylgruppen funktionalisierten Werkstoffoberflächen als gut lagerfähig erwiesen. Es hat jedoch auch Vorteile, die funktionalisierten Werkstoffoberflächen direkt weiterzuverarbeiten, insbesondere zu lackieren, da so überschüssiges Funktionalisierungsreagenz nicht störend ist und im Gegenteil direkt mit in die Lackschicht einpolymerisieren kann. Bei Lagerung empfiehlt es sich zur Vermeidung von Verschmutzungen oder des Verschmierens Vorkehrungen zu treffen wie Einzelplattenlagerung, Lagerung mit Zwischenlage oder Abreinigen des Überschusses. Gemäß einer bevorzugten Ausführungsform schließt sich an die Funktionalisierung mit Vinylgruppen unmittelbar eine Lackierung der funktionalisierten Werkstoffoberfläche an.

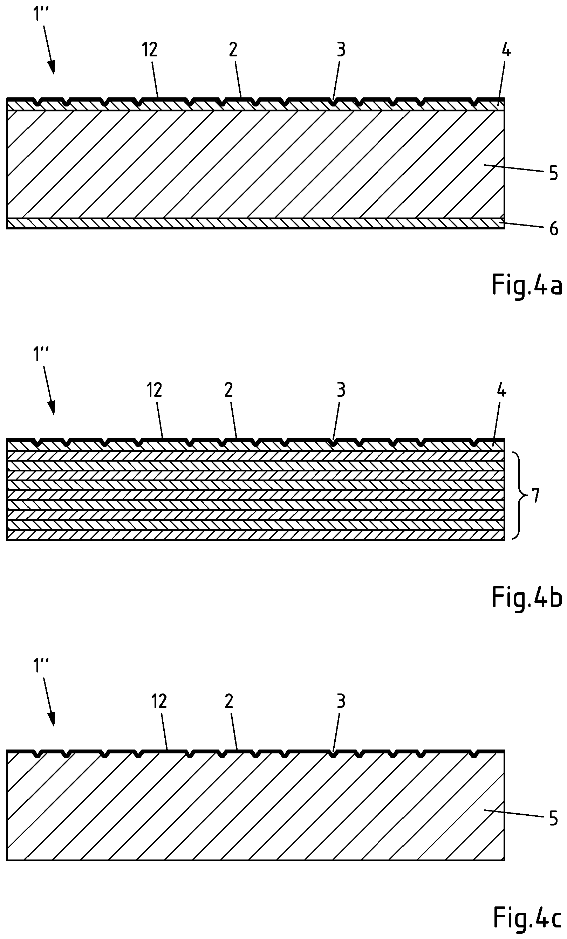

Wenn man direkt lackiert stört es nicht, weil das Reagenz einpolymerisiert. Fig. 4a - 4c zeigen die im Zusammenhang mit Fig. 2a - 2c bereits besprochenen Werkstoffe, diesmal jedoch nach erfindungsgemäßer Vinyl-Funktionalisierung und anschließender Lackierung. Direkt auf der mit Vinylgruppen (nicht gezeigt) funktionalisierten obersten Schicht 4 befindet sich nun eine Schicht aus strahlenhärtendem Lack 12. Es kann z.B. direkt auf eine erfindungsgemäß funktionalisierte strukturierte Melaminharzoberfläche ein handelsüblicher Acrylat-Decklack in einer Schichtdicke von 5-15 g/m² aufgetragen werden. Dadurch, dass auf Primer- bzw. Grundieranstriche erfindungsgemäß verzichtet werden kann, kann die Lackschicht 12 so dünn aufgetragen werden, dass die in der obersten Schicht 4 des Werkstoffs 1 vorhandene Strukturierung 3 auch nach der Lackierung erhalten bleibt (vgl. Fig. 2a - 2c vor der Lackierung mit Fig. 4a - 4c nach der Lackierung). Es ist somit möglich, beispielsweise strukturierte Aminoplastharzoberflächen, wie sie in Fig. 1 in Draufsicht schematisch gezeigt sind, in lackierter Form zu erhalten. Die Erfinder haben überraschenderweise festgestellt, dass wenn man eine derartige Oberflächenstrukturierung 3 mit einem matten Lack 12 oder einer Excimer-Härtung der Lackschicht 12 kombiniert, man natürlich anmutende Werkstoffoberflächen schafft, die vom Original (z.B. Echtholzparkett) in der Optik, Haptik und Temperaturgefühl so gut wie nicht mehr unterscheidbar sind und gleichzeitig verbesserte Oberflächeneigenschaften (z.B. Mikrokratz-, Witterungs- und Chemikalienbeständigkeit) aufweisen.

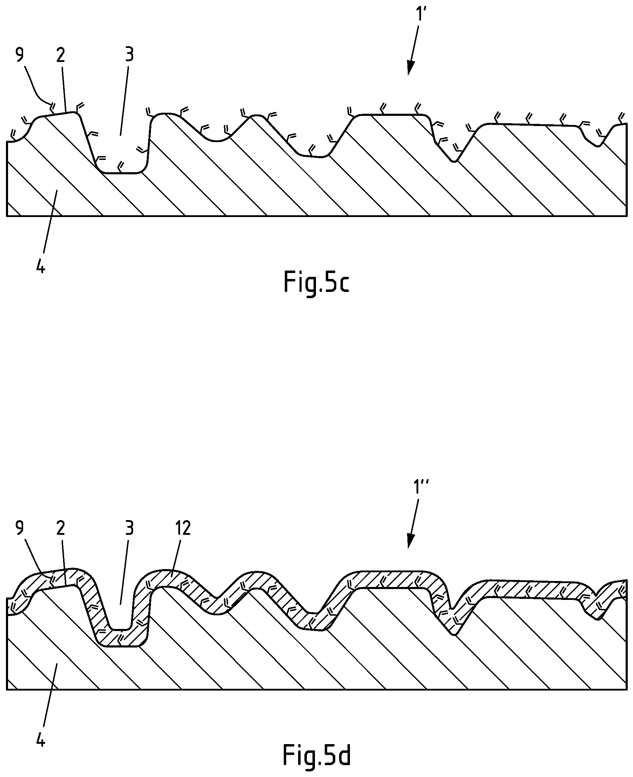

Fig. 5 dient der Veranschaulichung der Vorteile der Erfindung gegenüber dem Stand der Technik. In Fig. 5a ist eine Vergrößerung des Querschnitts durch die oberste Schicht 4, wie sie beispielsweise auch in den Fig. 2a - 2c zu sehen ist, gezeigt. Die oberste Schicht 4 weist eine Strukturierung 3 auf und besteht aus oder enthält einen aminogruppenhaltigen Kunststoff (z.B. ein Melaminharz), wodurch sie über eine Oberfläche aus aminogruppenhaltigem Kunststoff 2 verfügt. Würde man eine derartige Melaminharzoberfläche gemäß dem Stand der Technik mit einem strahlenhärtenden Lack 12 lackieren wollen (z.B. einem Acrylatlack), so müsste man zunächst eine Grundierungs- oder Primerschicht 13 auf die strukturierte Melaminharzoberfläche aufbringen, da strahlenhärtende Lacke nur sehr schlecht auf dieser haften. Der mehrschichtigen Lackaufbau 12, 13 hat eine - im Vergleich zu der größten Höhen- und Tiefendifferenz in der Strukturierung 3 (Rz-Wert) - erhebliche Lackschichtdicke zur Folge. Durch die Überlackierung geht die Strukturierung verloren. Es macht nach dem Stand der Technik daher keinen Sinn, beispielsweise eine mit einer Holzstruktur versehene Melaminharzoberfläche (vgl. Fig. 1), wie sie vielfach beispielsweise als Möbeloberfläche oder Fußbodenlaminat eingesetzt wird, überzulackieren. Eine derartige Lackierung würde eine ursprünglich eingeführte Strukturierung zunichte machen.

Durch die Erfindung wird eine Überlackierung von strukturierten Aminoplastharzoberflächen hingegen möglich gemacht. Fig. 5c zeigt eine erfindungsgemäße lackierbare Oberfläche, ähnlich wie Fig. 5a als eine Vergrößerung des Querschnitts durch die oberste Schicht 4, wie sie beispielsweise auch in den Fig. 2a - 2c zu sehen ist. Wie in Fig. 5a weist auch die oberste Schicht 4 in Fig. 5c eine Oberfläche aus aminogruppenhaltigem Kunststoff 2 auf, in welche eine Strukturierung 3 eingefügt worden ist. Wie aus einem Vergleich von Fig. 5a mit 5c deutlich wird, weist der erfindungsgemäß lackierbare Werkstoff 1' in Fig. 5c jedoch eine mit Vinylgruppen 9 funktionalisierte Oberfläche auf (s.a. Fig. 3b und 3d). Wie in Fig. 5d gezeigt, kann auf diese erfindungsgemäß mit Vinylgruppen 9 funktionalisierte Oberfläche direkt eine Schicht strahlenhärtender Lack 12 aufgebracht werden, ohne dass vorher eine Grundierungs- oder Primerschicht 13 aufgebracht werden muss. Fig. 5d zeigt die aufgetragene Schicht aus strahlenhärtendem Lack noch vor der Strahlenhärtung, wie an den noch vorhandenen Vinylgruppen 9 erkennbar. Während der strahleninduzierten radikalischen Polymerisation der Lackschicht 12 polymerisieren die auf der Oberfläche 2 vorhandenen Vinylgruppen 9 mit in den Lackfilm ein, der hierüber kovalent in der obersten Schicht 4 des Werkstoffs verankert wird. Dies erklärt die beobachtete hervorragende Haftung von strahlenhärtenden Lacken auf den von der Erfindung bereitgestellten lackierbaren Werkstoffoberflächen. Da die in die Oberfläche 2 eingeführten Vinylgruppen 9 während der Strahlenhärtung in den Lack einreagieren, sind sie im Anschluss an die Strahlenhärtung der Lackschicht 12 nicht mehr nachweisbar. Im Querschnitt erscheint ein erfindungsgemäß lackierter Werkstoff daher einfach so, als ob keine Primer- oder Grundierungsschicht verwendet worden wäre. Nur der Lackfilm selbst ist auf dem Substrat erkennbar.

Im Gegensatz zum Stand der Technik (s. Fig. 5c) bleibt gemäß der Erfindung beim Lackieren einer strukturierten Werkstoffoberfläche deren Strukturierung auch nach der Lackierung erhalten, da bei Auslassen der Primer- oder Grundierungsschicht wesentlich geringe Lackschichtdicken realisierbar sind. Fig. 5d zeigt daher die im erfindungsgemäß lackierten Werkstoff vorhandene strukturierte Lackschicht, die der Strukturierung der Werkstoffoberfläche vor der Lackierung entspricht (vgl. Fig. 5a oder 5c mit Fig. 5d).

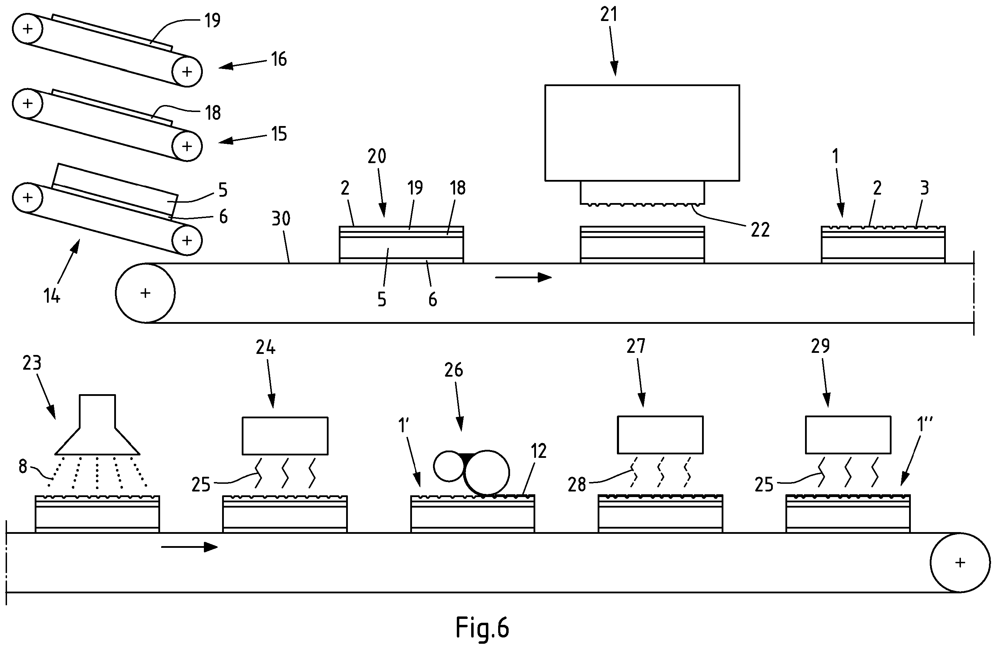

Fig. 6 zeigt beispielhaft eine Anlage und ein Verfahren zum Herstellen eines erfindungsgemäß lackierbaren Werkstoffs, der im Anschluss direkt zum erfindungsgemäß lackierten Werkstoff weiterverarbeitet wird. Über ein erstes, zweites und drittes Zuführförderband 14, 15, 16 werden eine Holzwerkstoffplatte als Träger 5 mit unterseitigem Gegenzug 6 (gezeigt als unterseitig angebrachter flüssiger Gegenzug, letzterer kann auch über ein separates viertes Zuführförderband zugeführt werden) sowie ein melaminharzimprägniertes Dekorpapier 18 und melaminharzimprägniertes Overlay 19 auf einem Beschickförderband 30 als Pressstapel 20 platziert. Das Beschickförderband 30 ist der Einfachheit halber als ein durchgehendes Förderband gezeichnet. In der Praxis handelt es sich jedoch um mehrere getrennte Förderbänder, deren Geschwindigkeiten und Oberflächeneigenschaften dem jeweiligen Verfahrensschritt angepasst sind. Der Pressstapel 20 durchläuft im Anschluss eine Kurztaktpresse 21, welche auf der dem Overlaypapier zugewandten Seite mit einem strukturierten Pressblech 22 ausgestattet ist. Die im Pressblech vorgesehene Struktur ist in diesem Beispiel das Negativabbild der in Fig. 1 gezeigten Holzmaserung. In der Kurztaktpresse wird der Presstapel bei 180 °C bis 230 °C und einem spezifischen Pressdruck (aktiver Druck auf der Plattenoberfläche) von 50 bis 300 N/cm² zum Werkstoff 1 verpresst, bei dem es sich um ein Laminatpaneel handelt, welches eine mit einer Strukturierung 3 versehene aminogruppenhaltige Oberfläche 2 aufweist. Es sind sowohl endständige primäre Aminogruppen als auch sekundäre Aminogruppen im ausgehärteten Melaminharz an der Oberfläche 2 vorhanden. Der Werkstoff 1 entspricht einem aus dem Stand der Technik bekannten Werkstoff mit strukturierter Oberfläche, wie er in vielfältigen Variationen als Fußbodenbelag oder Möbelbauteil hergestellt wird und in Zwischenlagern bereits vorhanden ist.

Die Herstellung des Werkstoffs 1 ist im oberen Teil der Fig. 6 daher nur der Vollständigkeit halber gezeigt. Der Werkstoff 1 ist lagerfähig und das Verfahren kann hier unterbrochen werden. Vor allem kann in der Praxis auf die zahlreichen bereits vorhandenen Werkstoffe 1 mit strukturierten, aminogruppenhaltigen Oberflächen 2, 3 zurückgegriffen werden. Diese können ohne Vorbehandlung dem erfindungsgemäßen Verfahren zur Oberflächenfunktionalisierung mit anschließender Lackierung zugeführt werden. Dies ist ein weiterer Vorteil der erfindungsgemäßen Lösung.

Der Werkstoff 1 mit strukturierter, aminogruppenhaltiger Oberfläche 2, 3 wird einer Einrichtung 23 zum Auftragen des erfindungsgemäßen Funktionalisierungsreagenzes 8 zugeführt. In der gezeigten Ausführungsform wird ein Funktionalisierungsreagenz mit zwei Acrylatgruppen verwendet (z.B. Dipropylenglycoldiacrylat, Tripropylenglycoldiacrylat oder Hexandioldiacrylat). In der Einrichtung 23 wird das Funktionalisierungsreagenz 8 auf die strukturierte, aminogruppenhaltige Oberfläche 2, 3 des Werkstoffs 1 aufgetragen. In Fig. 6 ist das Auftragen des Funktionalisierungsreagenzes 8 in der Einrichtung 23 als Aufsprühen gezeigt. Es sind jedoch auch zahlreiche alternative Auftragungswege wie in der Beschreibung ausgeführt möglich, insbesondere ein Auftragen über eine Walze wie in Fig. 6 für die Einrichtung zum Auftragen des strahlenhärtenden Lacks 26 gezeigt.

Im nächsten Schritt erfolgt ein Zur-Reaktion-Bringen des aufgetragenen Funktionalisierungsreagenzes 8 mit den Aminogruppen auf der Oberfläche 2 des Werkstoffs durch Einstellung der geeigneten Reaktionsbedingungen. Handelt es sich bei der gegenüber den Aminogruppen der Werkstoffoberfläche reaktiven Gruppe im Funktionalisierungsreagenz um eine Vinylgruppe, insbesondere einer solchen, die in Nachbarschaft zu einer elektronenziehenden Gruppe steht (wie z.B. in einer Acrylatgruppe), kann die Reaktion in Form einer strahleninduzierten Aza-Michael-Addition erfolgen.

Die mit Funktionalisierungsreagenz 8 versetzte, aminogruppenhaltige Oberfläche 2 des Werkstoffs 1 wird hierzu einer Strahlungsquelle 24 ausgesetzt. Die energiereiche Strahlung 25 (z.B. UV- oder Elektronenstrahlen) trifft auf die Oberfläche 2 und führt dort zu einer Aza-Michael-Addition einer Acrylatgruppe des Funktionalisierungsreagenzes 8 an Aminogruppen in der Oberfläche 2 (vgl. Fig. 3a - 3d). Das Funktionalisierungsreagenz 8 wird hierdurch auf die Oberfläche 2 des Werkstoffs aufgepfropft, was zu einer kovalenten Funktionalisierung der Oberfläche 2 mit Vinylgruppen führt. Der derart funktionalisierte Werkstoff 1' stellt den lackierbaren Werkstoff der Erfindung dar.

Der lackierbare Werkstoff 1' kann direkt im Anschluss oder in einem separaten Verfahren mit einem strahlenhärtenden Lack 12 lackiert werden. Hierzu durchläuft der Werkstoff 1' eine Einrichtung 26 zum Auftragen des strahlenhärtenden Lackes 12. In Fig. 6 ist das Auftragen des Lackes in Einrichtung 26 durch eine Walze gezeigt, es sind jedoch auch sämtliche dem Fachmann ansonsten bekannten Verfahren zum Aufbringen von strahlenhärtenden Lacken möglich. Die aufgetragene Schicht 12 aus strahlenhärtendem Lack wird anschließend in aus dem Stand der Technik bekannter Weise durch energiereiche Strahlung 25, 28 gehärtet. In der in Fig. 6 gezeigten Anlage ist zusätzlich zu der eigentlich zur Härtung benötigten zweiten Strahlungsquelle 29 (z.B. eine UV-Lampe oder ein Elektronenstrahler) noch eine vorgeschaltete Excimer-Strahlungsquelle 27 vorgesehen. In dieser wird die aufgetragene Lackschicht Excimer-Strahlung 28 (172 nm) ausgesetzt, wodurch es zu der in der Beschreibung näher erläuterten Mikrostrukturierung der Lackoberfläche kommt. Der so erhaltene lackierte Werkstoff 1" weist somit nicht nur eine makroskopisch strukturierte Lackoberfläche auf, die der im lackierbaren Werkstoff vorhandenen Oberflächenstrukturierung 3 entspricht (z.B. Holzmaserung, s. Draufsicht in Fig. 1), sondern zusätzlich noch eine Mikrostrukturierung, die eine besondere Mattierung hervorruft und der Oberfläche des Werkstoffs 1" auch Anti-Fingerprint-Eigenschaften verleiht.

Fig. 7 zeigt ein Schaubild, welches die Bestimmung der nach DIN EN ISO 4287 gemessenen Kennwerte Rz, Rz Max und Rt veranschaulicht. Dabei bedeutet Rz: gemittelte Differenz aus höchstem und niedrigstem Profil (Durchschnitt der fünf gezeigten Rz-Werte 1 bis 5); Rz Max: höchste gemessene Stelle (größter Rz-Wert, der bestimmt wurde); Rt: Gesamthöhe des Profils (Abstand zwischen dem höchsten Peak und dem tiefsten Tal des Profils über die gesamte evaluierte Länge ln).

### Ausführungsbeispiele

In allen Ausführungsbeispielen wurden industriell gefertigte Laminatfußboden- oder Möbeloberflächenpaneele mit strukturierter Melaminharzoberfläche aus der Produktion der Firma EGGER eingesetzt. Dabei handelte es sich um CPL-Platten mit folgendem Schichtaufbau: Gegenzug, MDF-Kern, melaminharzimprägniertes Dekor- und Overlaypapier, wobei in letztere beim Pressen die nachfolgenden Strukturen mittels entsprechend gestalteter Pressbleche eingeprägt worden waren:
- ST67: F870 Schiefer Dekorpapier, Handelsbezeichnung "CERAMIC", mit unregelmäßigem rauem Charakter (All-Over Struktur/keine Synchronstruktur)
- ST69: "Natural Pore" Dekorpapier - Authentische, dekortreue Holzmaserung in Kombination mit synchron dazu verlaufender Oberflächenstruktur
- ST28: "Gladstone Eiche" Dekorpapier (Optik von klassisch-geplankter Eiche), in Kombination mit der synchron dazu verlaufenden Oberflächenstruktur ST28 Feelwood Nature (Haptik von sandgestrahlter Eiche).
- F1: Holzmaserung in all-over Struktur

### Versuchsreihe 1

Wie in der nachstehenden Tabelle angegeben wurden die strukturierten Melaminharzoberflächen der Platten entweder überhaupt keiner Behandlung unterzogen (Vergleichsbeispiele 1, 3, 5 und 8) oder es wurden 0,5 g/m² Hexandioldiacrylat (HDDA) per Walzenauftrag aufgetragen und anschließend mit einer UV-Lampe bestrahlt (erfindungsgemäße Beispiele 2, 7 und 10; bestrahlt wurde mit einem 80 Watt Quecksilber-Strahler, mit 10 m/min Vorschub mit der Dosis von UV-A >350 mJ/cm²) oder es wurde ein handelsüblicher UV-Primer für Melaminharzoberflächen (ICA UVF5782) in einer Menge von 4 oder 4-5 g/m² per Walzenauftrag aufgetragen und durch UV-Bestrahlung angeliert (Vergleichsbeispiele 4, 6 und 9; bestrahlt wurde ebenfalls mit einem 80 Watt Quecksilber-Strahler, mit 10 m/min Vorschub mit der Dosis von UV-A >350 mJ/cm²). Die erfindungsgemäß mit HDDA vinylfunktionalisierten oder gemäß dem Stand der Technik geprimerten Oberflächen wurden anschließend mit handelsüblichem UV-Decklackzusammensetzungen (Acrylatlack, ICA UVS5595) lackiert und gemäß Herstellerangaben UV-gehärtet. Hierzu wurde nach dem Decklackauftrag bei 15 m/min erst Excimer gehärtet (Fa. IST) gefolgt von zweifacher Bestrahlung mit 120 W Quecksilber-Strahler zur Endaushärtung.

Der Glanzwert unter 60° und 85° wurde gemäß ÖNORM EN ISO 2813 (Version 2015-01-01) bestimmt. Ebenfalls bestimmt wurden die Oberflächenbeschaffenheit im Tastschnittverfahren nach DIN EN ISO 4287 (Version Oktober 1998). Die Definition des Rz-Werts ist wie in der Beschreibung und in Fig. 7 angegeben.

Die Haftung wurde mittels "Hamberger Hobel" ermittelt, einem genormten Prüfgerät der Firma Hamberger Industriewerke, mit welchem man einen Coin-Test unter definierten Bedingungen durchführen kann. Ein Metallstück mit einer münzähnlichen Kante wird mit einem einstellbaren Druck über die lackierte Fläche geschoben. Als Ergebnis wird die Kraft in Newton angegeben, bei der noch kein Weißbruch erkennbar ist. Alle Ergebnisse oberhalb von 15 Newton können grundsätzlich als akzeptabel angesehen werden.

Folgende Prüfergebnisse wurden erhalten:

**Tabelle 2**

| Probe | | Funktionalisierung mit Vinylgruppen | UV-Primer | UV-Decklack | Glanz 60° | Glanz 85° | Rz | Δ Rz | Hamberger Hobel |
|---|---|---|---|---|---|---|---|---|---|
| 1* | ST67 | - | - | - | 6,2 | 12,8 | 21,3 | | > 40 N |
| **2** | ST67 | 0,5 g/m² HDDA, UV | - | 7 g/m² | 3,2 | 6,9 | 24,9 | 3,6 | > 40 N |
| 3* | ST 69 | - | - | - | 5,2 | 10,6 | 61,1 | | > 40 N |
| 4** | ST 69 | - | 4 g/m² | 12 g/m² | 1,8 | 14,2 | 22,1 | -39,0 | < 15 N |
| 5* | ST 28 | - | - | | 4,1 | 10,8 | 55,1 | - | > 30 N |
| 6** | ST 28 | - | 4-5 g/m² | 7-8 g/m² | 5,8 | 32,1 | 43,7 | -11,4 | < 10 N |
| **7** | ST 28 | 0,5 g/m² HDDA, UV | - | 7 g/m² | 3 | 11,2 | 70,9 | 15,8 | > 30 N |
| 8* | F1 | - | - | | 8,4 | 23,2 | 35,1 | | > 40 N |
| 9** | F1 | - | 4-5 g/m² | 7-8 g/m² | 7,6 | 28,4 | 28,4 | -6,7 | < 15 N |
| **10** | F1 | 0,5 g/m² HDDA, UV | - | 7 g/m² | 3,1 | 12,3 | 38,0 | 2,9 | > 40 N |

| | | | | | | | | | |
|---|---|---|---|---|---|---|---|---|---|
| * Nicht erfindungsgemäß (Ausgangsprodukt, strukturierte Melaminharzoberfläche) ** Nicht erfindungsgemäß (mit UV-Primer und UV-Lack überlackiert) | | | | | | | | | |

Ein Vergleich der Proben 1* und 2 zeigt, dass es mit der erfindungsgemäßen Funktionalisierung möglich ist, einen UV-Lack direkt auf eine Melaminharzoberfläche aufzutragen, ohne dass es zu einer Verschlechterung des Haftverbundes kommt (Hamberger Hobel Coin Test). Durch die Verwendung eines matten UV-Lackes kann der unnatürlich hochglänzenden Melaminharzoberfläche ein mattes Erscheinungsbild verliehen werden (Glanz 60° bei ca. 3, vgl. erfindungsgemäße Beispiele 2, 7 und 10 mit den entsprechenden Melaminharzoberflächen 1*, 5* und 8*) und trotzdem deren zum Dekor passende strukturierte Oberfläche beibehalten oder sogar noch verstärkt werden (Differenz [Δ] in den Rz-Werten unverändert bis positiv bei den erfindungsgemäßen Beispielen 2, 7 und 10). Im Gegensatz hierzu führt der Auftrag einer Schicht Standard UV-Primer mit anschließender Lackierung schon bei den eingesetzten relativ dünnen Schichtdicken (üblich sind bei UV-Primern bis zu 10 g/m², und bei Decklacken bis zu 15 g/m²) zu einer starken Abnahme des Rz-Wertes nach der Lackierung (siehe negative Differenz [Δ] der Rz-Werte bei den Vergleichsbeispielen 4**, 6** und 9**).

Zusätzlich wurde noch die Mikrokratzbeständigkeit der Oberflächen gemäß DIN EN 16094 (Martin Dale Norm für Fußböden) bestimmt.

### (Bewertung 1 - 5; 1 beste Bewertung, 5 schlechteste Bewertung)

| | Oberfläche - unlackiert, (Proben 1*, 3*, 5* und 9*) | Oberfläche - lackiert (Proben 2, 7 und 10) |
|---|---|---|
| Martin Dale Prüfung A | >A2 | A1 |
| Martin Dale Prüfung B | >B3 | B1 |

Während die unlackierten Melaminharzoberflächen sehr anfällig gegenüber Mikrokratzern waren, ließ sich die Mikrokratzbeständigkeit durch die erfindungsgemäße Lackierung signifikant erhöhen, bei Erhalt der ursprünglich vorhandenen Strukturierung.

Die Begutachtung der Proben 1 bis 10 erfolgte ferner noch in einem Blindversuch durch geschulte Fachleute der Firma EGGER. Diese Begutachtung ergab, dass die erfindungsgemäßen Proben 2, 7 und 10 mit Abstand das natürlichste Erscheinungsbild von allen 10 Proben hatten und von ihrem Aussehen sowie ihrer Haptik und Anfühltemperatur kaum vom nachzuahmenden Original (Furnier-/Echtholzoberfläche, Stein-/Keramikdekore bzw. textiles Dekorbild mit glatter Struktur) zu unterscheiden waren.

### Versuchsreihe 2

Ähnliche Ergebnisse wie mit den in Versuchsreihe 1 verwendetem UV-Primer ICA UVF5782 und Decklack ICA UVS5595 wurden in zahlreichen Versuchen auch mit anderen handelsüblichen UV-Primern (getestet: Plantag 74170, Remmers UV120-112, Teknos E114203, Sherwin Williams UL/61099-469, Votteler L5405524) und Decklacken (getestet: Plantag 75773.6, Teknos E120239, Bergolin 2U073, Bona 7720, Akzo Nobel UV TOP 103939) erhalten. Die erfindungsgemäße Vinylfunktionalisierung war gegenüber den handelsüblichen UV-Primern durch die geringere Schichtdicke und besseren Haftung immer überlegen.

### Versuchsreihe 3

Es wurde eine Versuchsreihe wie für Versuchsreihe 1 beschrieben durchgeführt, nur dass anstelle von HDDA als Funktionalisierungsreagenz BDDA verwendet wurde. Es zeigten sich ähnlich gute Ergebnisse wie bei Versuchsreihe 1. Die erfindungsgemäße Vinylfunktionalisierung war gegenüber den handelsüblichen UV-Primern durch die geringere Schichtdicke und besseren Haftung immer überlegen.

### Versuchsreihe 4

Es wurde eine Versuchsreihe wie für Versuchsreihe 1 beschrieben durchgeführt, nur dass anstelle von HDDA als Funktionalisierungsreagenz DPGDA verwendet wurde. Es zeigten sich ähnlich gute Ergebnisse wie bei Versuchsreihe 1. Die erfindungsgemäße Vinylfunktionalisierung war gegenüber den handelsüblichen UV-Primern durch die geringere Schichtdicke und bessere Haftung immer überlegen.

### Versuchsreihe 5

Es wurde eine Versuchsreihe wie für Versuchsreihe 1 beschrieben durchgeführt, nur dass anstelle von HDDA als Funktionalisierungsreagenz TMPTA verwendet wurde. Es zeigten sich ähnlich gute Ergebnisse wie bei Versuchsreihe 1. Die erfindungsgemäße Vinylfunktionalisierung war gegenüber den handelsüblichen UV-Primern durch die geringere Schichtdicke und bessere Haftung immer überlegen.

### Versuchsreihe 6

### Beispiel 1:

In analoger Weise wie für Versuchsreihe 1 beschrieben wurde eine Möbeloberfläche Dekor H3399 mit der Struktur ST28 (Rohmuster) mit HDDA (1 g/m²) funktionalisiert. Für das Vergleichsbeispiel wurde stattdessen ein handelsüblicher UV-Primer (Plantag Primer 74170.5) in einer Auftragsmenge von 4 g/m² verwendet. Dieser enthält laut technischem Datenblatt: Propylidyntrimethanol, ethoxyliert, Ester mit Acrylsäure; 2-Ethylhexylacrylat und 2-Hydroxy-3-phenoxypropylacrylat. Als Decklack wurde in beiden Fällen ein UV Lack der Fa. Plantag 78700.1 (8g/m²) ablackiert. Dieser enthält laut technischem Datenblatt: 1,6-Hexandioldiacrylat, Acrylharz und Methylbenzoylformiat. Im Gegensatz zu Versuchsreihe 1 erfolgte jedoch keine Excimerhärtung. Folgende Ergebnisse wurden erhalten:

| | Rt Wert | Glanzgrad | Hamberger Hobel | Martin Dale (DIN EN 16094) |
|---|---|---|---|---|
| Rohmuster | 78,8 µm | 4,1 (60°) | 40 N | B2 / A3 |
| HDDA + Plantag Decklack 78700.1 | 78 µm | 7,3 (60°) | 40 N | B1 / A1 |
| Plantag Primer 74170.5 + Plantag Decklack 78700.1 | 73 µm | 8,5 (60°) | 10 N | B1 / A1 |

### Beispiel 2:

In analoger Weise wie für Versuchsreihe 1 beschrieben wurde ein Fußbodenpaneel mit Holzdekor H1007 "Parketteiche" und einer flacheren Struktur als Oberfläche mit DPGDA (Auftragsmenge 1,5 g/m²) funktionalisiert. Für das Vergleichsbeispiel wurde stattdessen ein handelsüblicher UV-Primer (UVILUX Primer 621-183) in einer Auftragsmenge von 4 g/m² verwendet. Dieser enthält laut technischem Datenblatt: exo-1,7,7-Trimethylbicyclo[2.2.1]hept-2-ylacrylat, Dipropylenglycoldiacrylat, 2-Propensäure, 2-Methyl-, 2-Hydroxyethylester und Ethylphenyl(2,4,6-trimethylbenzoyl)phosphinat. Als Decklack wurde in beiden Fällen ein UV-Decklack der Fa. Bona (Artikel Nr. 7720, Acrylatlack, Auftragsmenge 8 g/m²) lackiert und mit Excimer wie in Versuchsreihe 1 beschrieben ausgehärtet. Folgende Ergebnisse wurden erhalten:

| | Rt Wert | Glanzgrad | Hamberger Hobel | Martin Dale (DIN EN 16094) |
|---|---|---|---|---|
| Rohmuster | 49 µm | 8,4 (60°) | 40 N | B2 / A3 |
| DPGDA + Bona UT 7720 | 47,2 µm | 3,1 (60°) | 40 N | B1 / A1 |
| UVILUX Primer 621-183 + Bona UT 7720 | 36 µm | 3,3 (60°) | 12 N | B1 / A1 |

### Beispiel 3:

In analoger Weise wie für Versuchsreihe 1 beschrieben wurde ein Paneel mit synchroner Struktur ST 69 auf dem Holzdekor H2820 als Oberfläche mit 0,5 g/m² TMPTA funktionalisiert. Für das Vergleichsbeispiel wurde stattdessen ein handelsüblicher UV-Primer (Bergolin 1U080) in einer Auftragsmenge von 4 g/m² verwendet. Dieser enthält laut technischem Datenblatt: 4-(1,1-Dimethyl)cyclohexylacrylat, (5-Ethyl-1,3-dioxan-5-yl)methylacrylat, Ethyl phenyl (2,4,6-trimethylbenzoyl) phosphinat und 1,1,1-Trihydroxymethylpropyltriacrylat. Als Decklack wurde in beiden Fällen Bergolin UV Topcoat 2U080-090, farblos (ungesättigtes Acrylatharz, 11 g/m²) verwendet und wie in Versuchsreihe 1 beschrieben mit Excimer gehärtet. Der Decklack enthält laut technischem Datenblatt: 1,6-Hexandioldiacrylat (5-Ethyl-1,3-dioxan-5-yl)methylacrylat, Bis(1,2,2,6,6-pentamethyl-4-piperidyl)sebacat Ethyl phenyl (2,4,6-trimethylbenzoyl) phosphinat, Methyl-1,2,2,6,6-pentamethyl-4-piperidylsebazat und 1,1,1-Trihydroxymethylpropyltriacrylat. Folgende Ergebnisse wurden erhalten:

| | Rt Wert | Glanzgrad | Hamberger Hobel | Martin Dale (DIN EN 16094) |
|---|---|---|---|---|
| Rohmuster | 65 µm | 10,4 (60°) | 35 N | B2 / A3 |
| TMPTA + Bergolin 2U080 | 63,8 µm | 1,8 (60°) | 35 N | B1 / A1 |
| Bergolin 1U080 + Bergolin 2U080 | 54,2 µm | 5,2 (60°) | 10 N | B2 / A2 |

Wie ein Vergleich der Rt-Werte zu Beispielen 1 bis 3 zeigt, bleibt die Struktur bei der erfindungsgemäßen Lackierung immer am besten erhalten. Erfindungsgemäß lackierte Oberflächen weisen ähnlich gute Hamberger Hobel Ergebnisse wie die Melaminharz-Ausgangsoberflächen (Rohmuster) auf, erzielen im Martin Dale Test jedoch ähnlich gute Werte wie mit UV-Lack überlackierte Melaminharzoberflächen.

## Patentansprüche

1. Lackierbarer Werkstoff mit einer Oberfläche aus einem aminogruppenhaltigen Kunststoff, **dadurch gekennzeichnet, dass** die Oberfläche strukturiert ist und dass zumindest ein Teil der Aminogruppen auf der strukturierten Oberfläche des aminogruppenhaltigen Kunststoffs durch Aufpfropfen eines Funktionalisierungsreagenzes kovalent mit Vinylgruppen funktionalisiert worden ist,
wobei das Funktionalisierungsreagenz mindestens eine Vinylgruppe und mindestens eine gegenüber den Aminogruppen des aminogruppenhaltigen Kunststoffs reaktive Gruppe aufweist, wobei der Werkstoff mit einem vinylgruppen-vermittelten strahlenhärtenden Lack lackierbar ist.

2. Lackierbarer Werkstoff nach Anspruch 1, **dadurch gekennzeichnet, dass** das Funktionalisierungsreagenz ein Molekulargewicht von 90 bis 2000, bevorzugt von 95 bis 1100 und insbesondere bevorzugt von 95 bis 600 aufweist.

3. Lackierbarer Werkstoff nach einem der vorhergehenden Ansprüche, **dadurch gekennzeichnet, dass** die weitere gegenüber den Aminogruppen des aminogruppenhaltigen Kunststoffs reaktive Gruppe im Funktionalisierungsreagenz ausgewählt ist aus der Gruppe bestehend aus Epoxiden, Anhydriden, Säurechloriden, Säureaziden, Sulfonylchloriden, Ketonen, Aldehyden, Carbonsäuren, Estern, insbesondere N-Hydroxysuccinimid-Estern, Imidoestern, oder Carbonaten, Carbodiimiden, Isocyanaten, Isothiocyanaten, Alkylhalogeniden, Arylhalogeniden, Alkinen und Vinylgruppen wie z.B. Acrylat, Methacrylat oder Acrylamid.

4. Lackierbarer Werkstoff nach einem der vorhergehenden Ansprüche, **dadurch gekennzeichnet, dass** die weitere gegenüber den Aminogruppen des aminogruppenhaltigen Kunststoffs reaktive Gruppe im Funktionalisierungsreagenz ebenfalls eine Vinylgruppe ist.

5. Lackierbarer Werkstoff nach einem der vorhergehenden Ansprüche, **dadurch gekennzeichnet, dass** die strukturierte Oberfläche des aminogruppenhaltigen Kunststoffs durch das Aufpfropfen mittels Auftragens des Funktionalisierungsreagenzes in einer Menge von weniger als 5 g/m², insbesondere weniger als 2 g/m² oder weniger als 1 g/m² sowie durch anschließendes Erwärmen oder Bestrahlen mit UV- oder Elektronenstrahlen funktionalisiert ist.

6. Lackierbarer Werkstoff nach Anspruch 3 oder 4, **dadurch gekennzeichnet, dass** das Funktionalisierungsreagenz ausgewählt ist aus der Gruppe bestehend aus Di-, Tri-, Tetra-, Penta- oder noch höherfunktionellen Acrylaten, Methacrylaten, Vinylethern und Allylethern, wobei das Funktionalisierungsreagenz insbesondere ausgewählt sein kann aus der Gruppe bestehend aus Trimethylolpropantriacrylat, Dipropylenglycoldiacrylat, Tripropylenglycoldiacrylat, Hexandioldiacrylat, Pentaerythrittetraacrylat, Dipentaerythritpentaacrylat, Dipentaerythrithexaacrylat Neopentylglycoldiacrylat, sowie propoxilierte oder ethoxilierte Varianten dieser Verbindungen, Polyalkylenglycoldiacrylate, insbesondere Polyethylenglycoldiacrylate, Divinylether, insbesondere Diethylenglycoldivinylether, Triethylenglycoldivinylether oder Cyclohexandimethanoldivinylether, und Diallylether.

7. Lackierbarer Werkstoff nach einem der vorhergehenden Ansprüche, **dadurch gekennzeichnet, dass** die Vinylgruppen in der Werkstoffoberfläche und/oder im Funktionalisierungsreagenz ausgewählt sind aus der Gruppe bestehend aus Acrylaten, Methacrylaten, Vinylether, Allylether sowie vinylaromatischen Verbindungen, wobei letztere insbesondere ausgewählt sein können aus Styrol, C₁₋₄-alkylsubstituiertem Styrol, Stilben, Vinylbenzyldimethylamin, (4-Vinylbenzyl)Dimethylaminoethylether, N,N-Dimethylaminoethylstyrol, tert-Butoxystyrol und Vinylpyridin.

8. Lackierbarer Werkstoff nach einem der vorhergehenden Ansprüche, **dadurch gekennzeichnet, dass** der aminogruppenhaltige Kunststoff ausgewählt ist aus der Gruppe bestehend aus Aminoplastharzen, Aminopolysiloxanen, Polyvinylaminen, Polyalkyleniminen, Aminoepoxidharzen und Polyurethanen mit endständigen Aminogruppen.

9. Lackierbarer Werkstoff nach Anspruch 8, **dadurch gekennzeichnet, dass** der aminogruppenhaltige Kunststoff ein Aminoplastharz, insbesondere ein MelaminFormaldehydharz oder ein Melamin-Harnstoff-Formaldehydharz, ist.

10. Lackierbarer Werkstoff nach einem der vorhergehenden Ansprüche, **dadurch gekennzeichnet, dass** der Werkstoff ein bogen- oder plattenförmiger Werkstoff ist, insbesondere eine Holzwerkstoffplatte; ein mit einem aminogruppenhaltigen Kunststoff beschichteter Träger; ein imprägniertes oder beschichtetes Papier oder ein Laminat enthaltend ein oder mehrere imprägnierte oder beschichtete Papiere, insbesondere ein DPL, HPL oder CPL, eine Kompaktplatte oder ein anderer Schichtstoff.

11. Lackierter Werkstoff mit einer strukturierten Lackoberfläche erhältlich durch: (a) Bereitstellung eines lackierbaren Werkstoffs nach einem der Ansprüche 1 bis 10, (b) Auftragen einer Schicht eines vinylgruppen-vermittelten strahlenhärtenden Lacks auf die mit Vinylgruppen modifizierte, strukturierte Kunststoffoberfläche des Werkstoffs, (c) Strahlenhärtung der Lackschicht.

12. Lackierter Werkstoff nach Anspruch 11, **dadurch gekennzeichnet, dass** es sich bei dem strahlenhärtenden Lack um einen Decklack handelt und der lackierte Werkstoff keine Lack-Primer- oder Grundierungsschicht enthält.

13. Lackierter Werkstoff nach Anspruch 11 oder 12, **dadurch gekennzeichnet, dass** die Menge an insgesamt auf die Kunststoffoberfläche aufgetragenem strahlenhärtenden Lack weniger als 20 g/m², insbesondere weniger als 15 g/m² oder weniger als 10 g/m² beträgt.

14. Lackierter Werkstoff nach einem der Ansprüche 11 bis 13, **dadurch gekennzeichnet, dass** die Lackschicht eine Excimer-gehärtete Lackschicht ist.

15. Lackierter Werkstoff nach einem der Ansprüche 11 bis 13, **dadurch gekennzeichnet, dass** die Lackschicht eine Excimer-gehärtete Lackschicht ist und einen Glanzwert von unter 10, vorzugsweise unter 5, jeweils gemessen nach EN ISO 2813 mit der 60°-Geometrie, aufweist.

16. Lackierter Werkstoff nach einem der Ansprüche 11 bis 13, **dadurch gekennzeichnet, dass** die Lackschicht ein matter Lack ist und einen Glanzwert von unter 10, vorzugsweise unter 5, jeweils gemessen nach EN ISO 2813 mit der 60°-Geometrie, aufweist.

17. Lackierbarer Werkstoff nach einem der Ansprüche 1 bis 10 bzw. lackierter Werkstoff nach einem der Ansprüche 11 bis 16, **dadurch gekennzeichnet, dass** die strukturierte Werkstoffoberfläche bzw. die strukturierte Lackoberfläche einen Rz-Wert gemessen nach DIN EN ISO 4287 von mindestens 10 µm, insbesondere mindestens 15 µm oder mindestens 20 µm aufweist.

18. Lackierbarer Werkstoff bzw. lackierter Werkstoff nach Anspruch 17, **dadurch gekennzeichnet, dass** die Oberflächenstruktur der strukturierten Werkstoffoberfläche bzw. der strukturierten Lackoberfläche eine ursprünglich durch Prägung, Kaschierung, Kalandrierung, Ätzung, Lasern oder Bedruckung erzeugte dekorative Struktur ist, die insbesondere die Oberflächenstruktur von Holz, Naturstein, Kunststein, Keramik, Metall, Mosaiken, Dielen, Fliesen, Fugen oder eine andere mit dem bloßen Auge sichtbare dekorative Struktur darstellt.

19. Verfahren zur Herstellung eines lackierbaren Werkstoffs nach einem der Ansprüche 1 bis 10 umfassend die folgenden Schritte:
a) Bereitstellen eines Werkstoffs mit einer strukturierten Oberfläche aus einem aminogruppenhaltigen Kunststoff, wobei der Werkstoff mit einem vinylgruppen-vermittelten strahlenhärtenden Lack lackierbar ist,
b) kovalente Funktionalisierung der strukturierten Oberfläche mit Vinylgruppen durch
(i) In-Kontakt-Bringen der strukturierten Oberfläche mit einem Funktionalisierungsreagenz, welches mindestens eine Vinylgruppe und mindestens eine weitere, gegenüber den Aminogruppen des aminogruppenhaltigen Kunststoffs reaktive Gruppe aufweist und
(ii) Durchführung einer chemischen Reaktion zur Erzeugung einer kovalenten Bindung zwischen der zweiten reaktiven Gruppe des Funktionalisierungsreagenzes und einer Aminogruppe auf der strukturierten Oberfläche des aminogruppenhaltigen Kunststoffs, wodurch eine mit Vinylgruppen kovalent modifizierte strukturierte Oberfläche erhalten wird.

20. Verfahren zur Herstellung eines lackierten Werkstoffs mit einer strukturierten Lackoberfläche nach einem der Ansprüche 11 bis 18 umfassend die folgenden Schritte:
a) Durchführung eines Verfahrens nach Anspruch 19 oder Bereitstellung eines lackierbaren Werkstoffs nach einem der Ansprüche 1 bis 10,
b) Auftragen einer Schicht eines vinylgruppen-vermittelten strahlenhärtenden Lacks auf die mit Vinylgruppen funktionalisierte, strukturierte Oberfläche des Werkstoffs,
c) Strahlenhärtung der Lackschicht.

21. Verwendung einer Vinyl-Funktionalisierung als Ersatz für eine Primerschicht oder Grundierung bei der Lackierung von strukturierten Oberflächen aus aminogruppenhaltigem Kunststoff mit vinylgruppen-vermittelten strahlenhärtenden Lacken.

## Claims

1. Paintable material comprising a surface comprising an amino group-containing plastics material, **characterized in that** the surface is structured and **in that** at least a portion of the amino groups on the structured surface of the amino group-containing plastics material has been covalently functionalized with vinyl groups by means of grafting a functionalizing reagent,
wherein the functionalizing reagent comprises at least one vinyl group and at least one group that is reactive toward the amino groups of the amino group-containing plastics material, wherein the paintable material is able to be painted with a vinyl group-mediated radiation-curing paint.

2. Paintable material according to claim 1, **characterized in that** the functionalizing reagent has a molecular weight from 90 to 2000, preferably from 95 to 1100, and more preferably from 95 to 600.

3. Paintable material according to either of the preceding claims, **characterized in that** the further group in the functionalizing reagent that is reactive toward the amino groups of the amino group-containing plastics material is selected from the group consisting of epoxides, anhydrides, acid chlorides, acid azides, sulfonyl chlorides, ketones, aldehydes, carboxylic acids, esters, in particular N-hydroxysuccinimide esters, imido esters, or carbonates, carbodiimides, isocyanates, isothiocyanates, alkyl halides, aryl halides, alkynes and vinyl groups such as e.g. acrylate, methacrylate, or acrylamide.

4. Paintable material according to any of the preceding claims, **characterized in that** the further group in the functionalizing reagent that is reactive toward the amino groups of the amino group-containing plastics material is also a vinyl group.

5. Paintable material according to any of the preceding claims, **characterized in that** the structured surface of the amino group-containing plastics material is functionalized by means of grafting, by applying the functionalizing reagent in an amount of less than 5 g/m², in particular less than 2 g/m² or less than 1 g/m², and subsequently heating or irradiating it using UV or electron beams.

6. Paintable material according to claim 3 or 4, **characterized in that** the functionalizing reagent is selected from the group consisting of di-, tri-, tetra-, penta- or even higher functional acrylates, methacrylates, vinyl ethers and allyl ethers, it being possible for the functionalizing reagent in particular to be selected from the group consisting of trimethylolpropane triacrylate, dipropylene glycol diacrylate, tripropylene glycol diacrylate, hexanediol diacrylate, pentaerythritol tetraacrylate, dipentaerythritol pentaacrylate, dipentaerythritol hexaacrylate, neopentyl glycol diacrylate, and propoxylated or ethoxylated variants of these compounds, polyalkylene glycol diacrylates, in particular polyethylene glycol diacrylates, divinyl ethers, in particular diethylene glycol divinyl ethers, triethylene glycol divinyl ethers or cyclohexanedimethanol divinyl ethers, and diallyl ethers.

7. Paintable material according to any of the preceding claims, **characterized in that** the vinyl groups in the material surface and/or in the functionalizing reagent are selected from the group consisting of acrylates, methacrylates, vinyl ethers, allyl ethers and vinyl aromatic compounds, the latter being selected in particular from styrene, C₁₋₄ alkyl-substituted styrene, stilbene, vinylbenzyldimethylamine, (4-vinylbenzyl)dimethylaminoethyl ether, N,N-dimethylaminoethylstyrene, tert-butoxystyrene and vinylpyridine.

8. Paintable material according to any of the preceding claims, **characterized in that** the amino group-containing plastics material is selected from the group consisting of aminoplast resins, aminopolysiloxanes, polyvinylamines, polyalkylene imines, aminoepoxide resins, and polyurethanes that have terminal amino groups.

9. Paintable material according to claim 8, **characterized in that** the amino group-containing plastics material is an aminoplast resin, in particular a melamine-formaldehyde resin or a melamine-urea-formaldehyde resin.

10. Paintable material according to any of the preceding claims, **characterized in that** the material is a sheet-shaped or board-shaped material, in particular a wooden material board; a carrier coated with an amino group-containing plastics material; an impregnated or coated paper or a laminate containing one or more impregnated or coated papers, in particular a DPL, HPL or CPL, a compact board or another layered material.

11. Painted material having a structured paint surface that can be obtained by:
(a) providing a paintable material according to any of claims 1 to 10, (b) applying a layer of a vinyl group-mediated radiation-curing paint to the vinyl group-modified, structured plastics-material surface of the material, (c) radiation curing the paint layer.

12. Painted material according to claim 11, **characterized in that** the radiation-curing paint is a topcoat and the painted material does not contain a paint primer layer or undercoat layer.

13. Painted material according to claim 11 or 12, **characterized in that** in total, the amount of radiation-curing paint applied to the plastics-material surface is less than 20 g/m², in particular less than 15 g/m² or less than 10 g/m².

14. Painted material according to any of claims 11 to 13, **characterized in that** the paint layer is an excimer-cured paint layer.

15. Painted material according to any of claims 11 to 13, **characterized in that** the paint layer is an excimer-cured paint layer and has a gloss value of less than 10, preferably less than 5, in each case measured according to EN ISO 2813 using the geometry of 60°.

16. Painted material according to any of claims 11 to 13, **characterized in that** the paint layer is a matte paint and has a gloss value of less than 10, preferably less than 5, in each case measured according to EN ISO 2813 using the geometry of 60°.

17. Paintable material according to any of claims 1 to 10 or painted material according to any of claims 11 to 16, **characterized in that** the structured material surface or the structured paint surface has an Rz value measured according to DIN EN ISO 4287 of at least 10 *µ*m, in particular at least 15 *µ*m or at least 20 *µ*m.

18. Paintable material or painted material according to claim 17, **characterized in that** the surface structure of the structured material surface or the structured paint surface is a decorative structure which is initially produced by embossing, lamination, calendering, etching, lazering or printing and in particular represents the surface structure of wood, natural stone, artificial stone, ceramics, metal, mosaics, planks, tiles, joints or another decorative structure visible to the naked eye.

19. Method for producing a paintable material according to any of claims 1 to 10, comprising the following steps:
a) providing a material with a structured surface made of an amino group-containing plastics material, wherein the material can be painted with a vinyl group-mediated radiation-curing paint,
b) covalently functionalizing the structured surface with vinyl groups by
(i) bringing the structured surface into contact with a functionalizing reagent that comprises at least one vinyl group and at least one further group that is reactive toward the amino groups of the amino group-containing plastics material, and
(ii) performing a chemical reaction to create a covalent bond between the second reactive group of the functionalizing reagent and an amino group on the structured surface of the amino group-containing plastics material, as a result of which a structured surface covalently modified with vinyl groups is obtained.

20. Method for producing a painted material having a structured paint surface according to any of claims 11 to 18, comprising the following steps:
a) performing a method according to claim 19, or providing a paintable material according to any of claims 1 to 10,
b) applying a layer of vinyl group-mediated radiation-curing paint to the structured surface of the material that has been functionalized with vinyl groups,
c) radiation curing the paint layer.

21. Use of vinyl functionalization as a substitute for a primer layer or undercoat in the painting of structured surfaces made of amino group-containing plastics material using vinyl group-mediated radiation-curing paints.

## Revendications

1. Matériau pouvant être peint comportant une surface en une matière plastique contenant des groupes amine, **caractérisé en ce que** la surface est structurée et **en ce qu'**au moins une partie des groupes amine sur la surface structurée de la matière plastique contenant des groupes amine a été fonctionnalisée de manière covalente avec des groupes vinyle par greffage d'un réactif de fonctionnalisation,
dans lequel le réactif de fonctionnalisation présente au moins un groupe vinyle et au moins un groupe réactif vis-à-vis des groupes amine de la matière plastique contenant des groupes amine, dans lequel le matériau peut être peint avec une peinture durcissant par rayonnement et à médiation par groupes vinyle.

2. Matériau pouvant être peint selon la revendication 1, **caractérisé en ce que** le réactif de fonctionnalisation présente une masse moléculaire allant de 90 à 2000, de préférence de 95 à 1100 et de manière particulièrement préférée de 95 à 600.

3. Matériau pouvant être peint selon l'une des revendications précédentes,
**caractérisé en ce que** l'autre groupe réactif vis-à-vis des groupes amine de la matière plastique contenant des groupes amine dans le réactif de fonctionnalisation est choisi dans le groupe constitué d'époxydes, anhydrides, chlorures d'acide, azides d'acide, chlorures de sulfonyle, cétones, aldéhydes, acides carboxyliques, esters, en particulier esters de N-hydroxysuccinimide, imidoesters, ou carbonates, carbodiimides, isocyanates, isothiocyanates, halogénures d'alkyle, halogénures d'aryle, alcynes et groupes vinyle comme par exemple acrylate, méthacrylate ou acrylamide.

4. Matériau pouvant être peint selon l'une des revendications précédentes,
**caractérisé en ce que** l'autre groupe réactif vis-à-vis des groupes amine de la matière plastique contenant des groupes amine dans le réactif de fonctionnalisation est également un groupe vinyle.

5. Matériau pouvant être peint selon l'une des revendications précédentes,
**caractérisé en ce que** la surface structurée de la matière plastique contenant des groupes amine est fonctionnalisée par le greffage au moyen de l'application du réactif de fonctionnalisation en une quantité inférieure à 5 g/m², en particulier inférieure à 2 g/m² ou inférieure à 1 g/m², ainsi que par chauffage ou irradiation subséquente par des rayons UV ou des faisceaux d'électrons.

6. Matériau pouvant être peint selon la revendication 3 ou 4, **caractérisé en ce que** le réactif de fonctionnalisation est choisi dans le groupe constitué d'acrylates, méthacrylates, éthers vinyliques et éthers allyliques difonctionnels, trifonctionnels, tétrafonctionnels, pentafonctionnels ou encore plus fonctionnels, dans lequel le réactif de fonctionnalisation peut en particulier être choisi dans le groupe constitué de triacrylate de triméthylolpropane, diacrylate de dipropylèneglycol, diacrylate de tripropylèneglycol, diacrylate d'hexanediol, tétraacrylate de pentaérythritol, pentaacrylate de dipentaérythritol, hexaacrylate de dipentaérythritol, diacrylate de néopentylglycol, ainsi que de variantes propoxylées ou éthoxylées de ces composés, diacrylates de polyalkylèneglycol, en particulier diacrylates de polyéthylèneglycol, éthers divinyliques, en particulier éthers divinyliques de diéthylèneglycol, éthers divinyliques de triéthylèneglycol ou éthers divinyliques de cyclohexanediméthanol, et éthers diallyliques.

7. Matériau pouvant être peint selon l'une des revendications précédentes,
**caractérisé en ce que** les groupes vinyle dans la surface du matériau et/ou dans le réactif de fonctionnalisation sont choisis dans le groupe constitué d'acrylates, méthacrylates, éthers vinyliques, éthers allyliques ainsi que de composés vinylaromatiques, dans lequel ces derniers peuvent être choisis en particulier parmi styrène, styrène substitué par un alkyle en C₁₋₄, stilbène, vinylbenzyldiméthylamine, (4-vinylbenzyl)diméthylamineéthyléther, N,N-diméthylamineéthylstyrène, tert-butoxystyrène et vinylpyridine.

8. Matériau pouvant être peint selon l'une des revendications précédentes,
**caractérisé en ce que** la matière plastique contenant des groupes amine est choisie dans le groupe constitué de résines aminoplastes, aminopolysiloxanes, polyvinylamines, polyalkylèneimines, résines aminoépoxydes et polyuréthanes comportant des groupes amine terminaux.

9. Matériau pouvant être peint selon la revendication 8, **caractérisé en ce que** la matière plastique contenant des groupes amine est une résine aminoplaste, en particulier une résine mélamine-formaldéhyde ou une résine mélamine-urée-formaldéhyde.

10. Matériau pouvant être peint selon l'une des revendications précédentes,
**caractérisé en ce que** le matériau est un matériau en forme de feuille ou de plaque, en particulier un panneau de bois; un support revêtu d'une matière plastique contenant des groupes amine; un papier imprégné ou revêtu ou un stratifié contenant un ou plusieurs papiers imprégnés ou revêtus, en particulier un DPL, HPL ou CPL, un panneau compact ou un autre stratifié.

11. Matériau peint comportant une surface peinte structurée pouvant être obtenu par: (a) la mise à disposition d'un matériau pouvant être peint selon l'une des revendications 1 à 10, (b) l'application d'une couche d'une peinture durcissant par rayonnement et à médiation par groupes vinyle sur la surface en matière plastique du matériau structurée et modifiée par des groupes vinyle, (c) le durcissement par rayonnement de la couche de peinture.

12. Matériau peint selon la revendication 11, **caractérisé en ce que** la peinture durcissant par rayonnement est une peinture de finition et le matériau peint ne contient pas de couche primaire ou de couche d'apprêt.

13. Matériau peint selon la revendication 11 ou 12, **caractérisé en ce que** la quantité de peinture durcissant par rayonnement appliquée au total sur la surface en matière plastique est inférieure à 20 g/m², en particulier inférieure à 15 g/m² ou inférieure à 10 g/m².

14. Matériau peint selon l'une des revendications 11 à 13, **caractérisé en ce que** la couche de peinture est une couche de peinture durcie par excimère.

15. Matériau peint selon l'une des revendications 11 à 13, **caractérisé en ce que** la couche de peinture est une couche de peinture durcie par excimère et présente une valeur de brillance inférieure à 10, de préférence inférieure à 5, respectivement mesurée selon la norme EN ISO 2813 avec la géométrie de 60°.

16. Matériau peint selon l'une des revendications 11 à 13, **caractérisé en ce que** la couche de peinture est une peinture mate et présente une valeur de brillance inférieure à 10, de préférence inférieure à 5, respectivement mesurée selon la norme EN ISO 2813 avec la géométrie de 60°.

17. Matériau pouvant être peint selon l'une des revendications 1 à 10 ou matériau peint selon l'une des revendications 11 à 16, **caractérisé en ce que** la surface structurée du matériau ou la surface structurée de la peinture présente une valeur Rz mesurée selon la norme DIN EN ISO 4287 d'au moins 10 *µ*m, en particulier d'au moins 15 *µ*m ou d'au moins 20 *µ*m.

18. Matériau pouvant être peint ou matériau peint selon la revendication 17,
**caractérisé en ce que** la structure de surface de la surface structurée du matériau ou de la surface structurée de la peinture est une structure décorative obtenue à l'origine par gaufrage, contrecollage, calandrage, gravure, laser ou impression, laquelle représente en particulier la structure de surface de bois, pierre naturelle, pierre artificielle, céramique, métal, mosaïques, planches, carreaux, joints ou une autre structure décorative visible à l'œil nu.

19. Procédé pour la fabrication d'un matériau pouvant être peint selon l'une des revendications 1 à 10, comprenant les étapes suivantes:
a) mise à disposition d'un matériau comportant une surface structurée en une matière plastique contenant des groupes amine, dans lequel le matériau peut être peint avec une peinture durcissant par rayonnement et à médiation par groupes vinyle
b) fonctionnalisation de manière covalente de la surface structurée avec des groupes vinyle par
(i) mise en contact de la surface structurée avec un réactif de fonctionnalisation qui présente au moins un groupe vinyle et au moins un autre groupe réactif vis-à-vis des groupes amine de la matière plastique contenant des groupes amine et
(ii) réalisation d'une réaction chimique pour créer une liaison covalente entre le second groupe réactif du réactif de fonctionnalisation et un groupe amine sur la surface structurée de la matière plastique contenant des groupes amine, moyennant quoi une surface structurée modifiée de manière covalente par des groupes vinyle est obtenue.

20. Procédé pour la fabrication d'un matériau peint comportant une surface peinte structurée selon l'une des revendications 11 à 18, comprenant les étapes suivantes:
a) réalisation d'un procédé selon la revendication 19 ou mise à disposition d'un matériau pouvant être peint selon l'une des revendications 1 à 10,
b) application d'une couche d'une peinture durcissant par rayonnement et à médiation par groupes vinyle sur la surface du matériau structurée et fonctionnalisée par des groupes vinyle,
c) durcissement par rayonnement de la couche de peinture.

21. Utilisation d'une fonctionnalisation par groupes vinyle en remplacement d'une couche primaire ou d'une couche d'apprêt lors de la peinture de surfaces structurées en une matière plastique contenant des groupes amine avec des peintures durcissant par rayonnement et à médiation par groupes vinyle.
